(19) Europäisches Patentamt
European Patent Office
Office européen des brevets

(11) EP 0 749 988 A2

# (12) EUROPÄISCHE PATENTANMELDUNG

(43) Veröffentlichungstag:
**27.12.1996 Patentblatt 1996/52**

(51) Int. Cl.$^6$: **C08F 232/08**, C08F 210/00, C08F 4/642

(21) Anmeldenummer: **96109565.0**

(22) Anmeldetag: **14.06.1996**

(84) Benannte Vertragsstaaten:
**DE FR GB IT NL**

(30) Priorität: **19.06.1995 DE 19522106**

(71) Anmelder:
- **HOECHST AKTIENGESELLSCHAFT**
**65929 Frankfurt am Main (DE)**
- **Mitsui Petrochemical Ind., Ltd.**
**Tokyo (JP)**

(72) Erfinder:
- **Helmer-Metzmann, Freddy, Dr.**
**55270 Essenheim (DE)**
- **Osan, Frank, Dr.**
**65779 Kelkheim (DE)**
- **Riedel, Michael, Dr.**
**60529 Frankfurt (DE)**

(74) Vertreter: **Aulmich, Gerhard, Dr. et al**
**Hoechst AG**
**Patent- und Lizenzabteilung**
**Gebäude K 801**
**65926 Frankfurt am Main (DE)**

## (54) Verfahren zur Herstellung von Cycloolefincopolymeren

(57) Die vorliegende Erfindung bezieht sich auf ein Verfahren zur Herstellung eines Cycloolefincopolymers durch Polymerisation mindestens eines cyclischen Olefins und mindestens eines acyclischen Olefins, in Gegenwart eines Katalysators, welcher mindestens einen Cokatalysator und mindestens eine stereorigide Metallocenverbindung enthält, wobei die stereorigide Metallocenverbindung als Liganden mindestens zwei substituierte oder unsubstituierte Cyclopentadienylgruppen aufweist, die über einen Fünfring miteinander verbunden sind, wobei mindestens eine Cyclopentadienylgruppe an den verbindenden Fünfring anelliert ist.

EP 0 749 988 A2

**Beschreibung**

Die vorliegende Erfindung betrifft ein Verfahren zur Herstellung von Cycloolefincopolymeren.

Aus der Literatur ist bekannt, daß mit Metallocen-Aluminoxan-Katalysatorsystemen Cycloolefinhomopolymere und -copolymere hergestellt werden können (EP 283 164, EP 407 870). Die Polymerisation der Cycloolefine verläuft dabei unter Erhalt der Cyclen und kann in Lösungsmitteln oder in Masse durchgeführt werden. Als Lösungsmittel werden z. B. Kohlenwasserstoffe eingesetzt.

Cycloolefincopolymere können mit einem hohen Gehalt an Cycloolefin hergestellt werden, und besitzen dann eine hohe Glastemperatur. Damit verbunden ist eine hohe thermische Formbeständigkeit, weswegen diese Polymere sich zur Verwendung als thermoplastische Formmassen eignen.

Bei Cycloolefincopolymeren, die mittels Metallocentechnologie hergestellt werden, kann man zwei Eigenschaftsreihen unterscheiden. Cycloolefincopolymere, die mit spiegelsymmetrischen Metallocenen hergestellt werden, weisen relativ niedrige Reißspannungen auf. Cycloolefincopolymere, die durch Einsatz von $C_2$-symmetrischen oder unsymmetrischen Metallocenen hergestellt werden, zeichnen sich im Vergleich dazu durch hohe Reißspannungen aus. Metallocene, die sich zur Herstellung von Cycloolefincopolymeren mit hohen Reißspannungen eignen, liefern relativ niedrige Massenmittel des Molekulargewichtes und weisen eine unbefriedigende Polymerisationsaktivität auf (P 4304307.0). Entsprechend müssen bei der Polymerisation große Katalysatormengen eingesetzt werden, verbunden mit hohen Herstellungskosten für die angestrebten Cycloolefincopolymere. Außerdem entstehen bei der Verwendung von Ethylen als Comonomer häufig teilkristalline Ethylenpolymerisate als Nebenprodukte, welche die Transparenz der Cycloolefincopolymere deutlich beeinträchtigen können.

Es war daher Aufgabe der Erfindung, ein Verfahren zu finden, welches Cycloolefincopolymere liefert, welche die Nachteile des Standes der Technik vermeiden.

Es wurde gefunden, daß durch die Verwendung spezieller stereorigider Metallocene bei der Herstellung von Cycloolefincopolymeren diese Aufgabe erfüllt werden kann.

Die Erfindung betrifft somit ein Verfahren zur Herstellung eines Cycloolefincopolymers durch Polymerisation mindestens eines cyclischen Olefins und mindestens eines acyclischen Olefins, in Gegenwart eines Katalysators, welcher mindestens einen Cokatalysator und mindestens eine stereorigiden Metallocenverbindung enthält, wobei die stereorigide Metallocenverbindung als Liganden mindestens zwei substituierte oder unsubstituierte Cyclopentadienylgruppen aufweist, die über einen Fünfring miteinander verbunden sind, wobei mindestens eine Cyclopentadienylgruppe an den verbindenden Fünfring anelliert ist.

Bei der Bestimmung der Anzahl der Ringatome des verbindenden Fünfrings der in dem erfindungsgemäßen Verfahren eingesetzten Metallocenverbindung werden diejenigen Kohlenstoffatome der an den verbindenden Fünfring anellierten Cyclopentadienylgruppe mitgezählt, welche aufgrund der Anellierung Teile des verbindenden Fünfrings sind. Mögliche Substituenten an dem verbindenden Fünfring werden hierbei nicht mitgezählt.

Bevorzugt befindet sich bei der in dem erfindungsgemäßen Verfahren eingesetzten Metallocenverbindung eine Cyclopentadienylgruppe als Substituent an dem verbindenden Fünfring (d. h., die Cyclopentadienylgruppe ist über eine kovalente Bindung an den verbindenden Fünfring gebunden), während eine weitere Cyclopentadienylgruppe an den verbindenden Fünfring annelliert ist. Die Cyclopentadienylgruppen können unsubstituiert oder substituiert sein. Bevorzugt ist die an den verbindenden Fünfring anellierte Cyclopentadienylgruppe unsubstituiert.

Substituierte Cyclopentadienylgruppen tragen bevorzugt einen oder mehrere $C_1$-$C_{30}$-kohlenstoffhaltige Reste wie $C_1$-$C_{10}$-Alkyl, $C_6$-$C_{20}$-Aryl (z.B. Phenyl oder Naphthyl) oder zwei oder mehr der $C_1$-$C_{30}$-kohlenstoffhaltigen Reste bilden ein Ringsystem.

Beispiele für substituierte Cyclopentadienylgruppen sind Methylcyclopentadienyl, Methyl-tert.-butylcyclopentadienyl, tert.-Butylcyclopentadienyl, Isopropylcyclopentadienyl, Dimethylcyclopentadienyl, Trimethylethylcyclopentadienyl, Phenylcyclopentadienyl, Diphenylcyclopentadienyl, Indenyl, Methylindenyl, Ethylindenyl, tert.-Butylindenyl, Trimethylsilylindenyl, Methyl-phenylindenyl, Ethyl-phenylindenyl, Methyl-naphthyl-indenyl, Methyl-iso-propyl-indenyl, Benzoindenyl, Methyl-4,5-benzoindenyl, Methyl-$\alpha$-acenaphthindenyl, Methyl-di-iso-propylindenyl, Fluorenyl, Methylfluorenyl oder Di-tert.-butylfluorenyl.

Der verbindende Fünfring der in dem erfindungsgemäßen Verfahren eingesetzten Metallocenverbindung ist bevorzugt ein aliphatisch und kann auch Heteroatome wie Stickstoff, Sauerstoff, Schwefel, Silizium oder Germanium enthalten. Der verbindende Fünfring kann auch Substituenten wie $C_1$-$C_{40}$ kohlenstoffhaltige Gruppen (z.B. $C_1$-$C_{10}$-Alkyl oder $C_6$-$C_{20}$-Aryl) tragen.

Die Zentraleinheit $M^1R^x{}_n$ der in dem erfindungsgemäßen Verfahren eingesetzten Metallocenverbindung besteht bevorzugt aus einem Übergangsmetallatom $M^1$, insbesondere der Gruppe IIIb, IVb, Vb oder VIb des Periodensystems der Elemente, welches n Substituenten $R^x$ trägt, die gleich oder verschieden sind und vorzugsweise eine $C_1$-$C_{40}$-kohlenstoffhaltige Gruppe, ein Halogenatom, eine OH-Gruppe oder ein Wasserstoffatom bedeuten. Die Summe aus der Anzahl der Substituenten $R^x$ und der Anzahl der substituierten oder unsubstituierten Cyclopentadienylgruppen (Liganden) entspricht der Wertigkeit des Übergangsmetallatoms $M^1$.

Bevorzugt wird in dem erfindungsgemäßen Verfahren eine stereorigide Metallocenverbindung der Formel I einge-

setzt

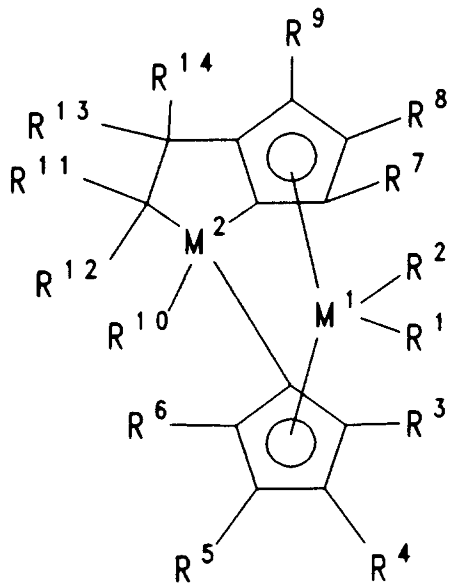

(I) ,

worin

$M^1$ ein Metall der Gruppe IIIb, IVb, Vb oder VIb des Periodensystems ist,

$M^2$ Kohlenstoff, Silizium oder Germanium ist,

$R^1$ und $R^2$ gleich oder verschieden sind und ein Wasserstoffatom, eine $C_1$-$C_{40}$-kohlenstoffhaltige Gruppe wie eine $C_1$-$C_{10}$-Alkyl-, eine $C_1$-$C_{10}$-Alkoxy, eine $C_6$-$C_{10}$-Aryl-, eine $C_6$-$C_{25}$-Aryloxy-, eine $C_2$-$C_{10}$-Alkenyl-, eine $C_7$-$C_{40}$-Arylalkyl- oder eine $C_7$-$C_{40}$-Arylalkenylgruppe, eine OH-Gruppe, ein Halogenatom oder $NR^{15}_2$, worin $R^{15}$ gleich oder verschieden ein Halogenatom, eine $C_1$-$C_{10}$-Alkylgruppe oder eine $C_6$-$C_{10}$-Arylgruppe sind oder ein Ringsystem bilden, bedeuten, oder $R^1$ und $R^2$ zusammen mit den sie verbindenden Atomen ein Ringsystem bilden,

$R^3$, $R^4$, $R^5$, $R^6$, $R^7$, $R^8$ und $R^9$ gleich oder verschieden sind und ein Wasserstoffatom, ein Halogenatom, eine $C_1$-$C_{40}$-kohlenstoffhaltige Gruppe wie eine $C_1$-$C_{10}$-Alkylgruppe die halogeniert sein kann, eine $C_6$-$C_{20}$-Arylgruppe, die halogeniert sein kann, eine $C_6$-$C_{20}$-Aryloxy-, eine $C_2$-$C_{12}$-Alkenyl-, eine $C_7$-$C_{40}$-Arylalkyl-, eine $C_7$-$C_{40}$-Alkylaryl-, oder eine $C_8$-$C_{40}$-Arylalkenylgruppe, einen $-R^{15}$-$SiR^{15}_3$-, $-NR^{15}_2$-, $-SiOR^{15}_3$-, $-SiSR^{15}_3$- oder $PR^{15}_2$-Rest bedeuten, worin $R^{15}$ gleich oder verschieden ein Halogenatom, eine $C_1$-$C_{10}$-Alkylgruppe oder eine $C_6$-$C_{10}$-Arylgruppe sind oder ein Ringsystem bilden, oder zwei oder mehr benachbarte Reste $R^3$, $R^4$, $R^5$, $R^6$, $R^7$, $R^8$ und $R^9$ zusammen mit den sie verbindenen Atomen ein Ringsystem bilden, welches bevorzugt 4 bis 40, besonders bevorzugt 6 bis 20 Kohlenstoffatome enthält,

$R^{10}$ ein Wasserstoffatom, oder eine $C_1$-$C_{40}$-kohlenstoffhaltige Gruppe wie eine $C_1$-$C_{20}$-Alkyl-, eine $C_1$-$C_{10}$-Alkoxy-, eine $C_6$-$C_{20}$-Aryl-, eine $C_6$-$C_{20}$-Aryloxy-, eine $C_2$-$C_{12}$-Alkenyl-, eine $C_7$-$C_{40}$-Arylalkyl-, eine $C_7$-$C_{40}$-Alkylaryl-, oder eine $C_8$-$C_{40}$-Arylalkenylgruppe bedeutet, die jeweils Reste $-NR^{15}_3$, $-SiR^{15}_3$, $-SR^{15}_2$ oder $-OSiR^{15}_3$ tragen können, worin $R^{15}$ ein Halogenatom, eine $C_1$-$C_{10}$-Alkylgruppe oder eine $C_6$-$C_{10}$-Arylgruppe ist, oder $R^{10}$ mit einem oder mehreren der Reste $R^3$, $R^4$, $R^5$ und $R^6$ verbunden ist,

$R^{11}$ und $R^{12}$ gleich oder verschieden sind, und ein Wasserstoffatom, eine $C_1$-$C_{40}$-kohlenstoffhaltige Gruppe wie eine $C_1$-$C_{20}$-Alkyl-, eine $C_1$-$C_{10}$-Alkoxy-, eine $C_6$-$C_{20}$-Aryl-, eine $C_2$-$C_{12}$-Alkenyl-, ein $C_7$-$C_{40}$-Arylalkyl-, eine $C_7$-$C_{40}$-Alkylaryl-, oder eine $C_8$-$C_{40}$-Arylalkenylgruppe bedeutet, die jeweils Reste, wie ein Halogenatom, $-NR^{15}_3$, $-SR^{15}_2$, $-SiR^{15}_3$ oder $-OSiR^{15}_3$ tragen können, worin $R^{15}$ ein Halogenatom, eine $C_1$-$C_{10}$ Alkylgruppe oder eine $C_6$-$C_{10}$ Arylgruppe ist,

$R^{13}$ und $R^{14}$ gleich oder verschieden sind, und ein Wasserstoffatom, eine $C_1$-$C_{40}$-kohlenstoffhaltige Gruppe wie eine $C_1$-$C_{20}$-Alkyl-, eine $C_1$-$C_{10}$-Alkoxy-, eine $C_6$-$C_{20}$-Aryl-, eine $C_2$-$C_{12}$-Alkenyl-, ein $C_7$-$C_{40}$-Arylalkyl-, eine $C_7$-$C_{40}$-Alkylaryl-, oder eine $C_8$-$C_{40}$-Arylalkenylgruppe bedeutet, die jeweils Reste, wie ein Halogenatom, $-NR^{15}_3$, $-SR^{15}_2$, $-SiR^{15}_3$ oder $-OSiR^{15}_3$ tragen können, worin $R^{15}$ ein Halogenatom, eine $C_1$-$C_{10}$ Alkylgruppe oder eine $C_6$-$C_{10}$ Arylgruppe ist.

Für Verbindungen der Formel I gilt bevorzugt, daß

$M^1$ ein Metall der Gruppe IVb des Periodensystems der Elemente wie Titan, Zirkonium oder Hafnium, insbesondere Zirkonium ist,

$R^1$ und $R^2$ gleich sind und eine $C_1$-$C_4$-Alkylgruppe oder ein Halogenatom wie Fluor, Chlor, Brom oder Jod, insbesondere Chlor bedeuten,

$R^3$, $R^4$, $R^5$, $R^6$, $R^7$, $R^8$ und $R^9$ gleich oder verschieden sind und ein Wasserstoffatom, eine $C_1$-$C_{10}$-Alkylgruppe oder eine $C_6$-$C_{24}$-Arylgruppe sind, oder zwei oder mehr benachbarte Reste $R^3$, $R^4$, $R^5$, $R^6$, $R^7$, $R^8$ und $R^9$ zusammen mit

den sie verbindenden Atomen ein aromatisches oder aliphatisches kohlenstoffhaltiges Ringsystem mit 4 bis 20 Kohlenstoffatomen bilden,
$R^{10}$ ein Wasserstoffatom, eine $C_6$-$C_{24}$-Arylgruppe oder eine $C_1$-$C_{10}$-Alkylgruppe, insbesondere $C_1$-$C_4$-Alkylgruppe ist,
$M^2$ Kohlenstoff ist,
$R^{11}$ und $R^{12}$ gleich oder verschieden sind, und $R^{11}$ ein Wasserstoffatom, eine $C_1$-$C_{10}$-kohlenstoffhaltige Gruppe, insbesondere eine $C_1$-$C_4$-Alkylgruppe oder eine $C_6$-$C_{10}$-Arylgruppe und $R^{12}$ ein Wasserstoffatom sind und
$R^{13}$ und $R^{14}$ gleich oder verschieden sind und ein Wasserstoffatom, eine $C_1$-$C_{10}$-kohlenstoffhaltige Gruppe, insbesondere eine $C_1$-$C_4$-Alkylgruppe oder eine $C_6$-$C_{10}$-Arylgruppe bedeuten.

Besonders bevorzugt sind Verbindungen der Formel 1, worin
$M^1$ Zirkonium ist,
$R^1$ und $R^2$ gleich sind und ein Halogenatom, insbesondere Chlor bedeuten,
$R^3$, $R^4$, $R^5$, $R^6$, $R^7$ und $R^9$ gleich oder verschieden sind und ein Wasserstoffatom oder eine $C_1$-$C_4$-Alkylgruppe wie Methyl, Ethyl, Propyl, Isopropyl, Butyl oder Isobutyl oder eine $C_6$-$C_{14}$-Arylgruppe wie Phenyl oder Naphtyl bedeuten, oder
$R^3$ und $R^4$ und/oder $R^5$ und $R^6$ zusammen mit den sie verbindenden Atomen ein aromatisches Kohlenwasserstoffringsystem mit 4 bis 20 Kohlenstoffatomen bilden, insbesondere einen Sechsring, der seinerseits substituiert sein kann,
$R^8$ ein Wasserstoffatom ist,
$M^2$ ein Kohlenstoffatom ist,
$R^{10}$ ein Wasserstoffatom, eine $C_1$-$C_6$-Alkylgruppe, insbesondere Methyl, oder eine $C_6$-$C_{10}$-Arylgruppe, insbesondere Phenyl ist,
$R^{11}$ und $R^{12}$ gleich sind und ein Wasserstoffatom bedeuten und
$R^{13}$ und $R^{14}$ gleich oder verschieden sind und eine Methyl- oder eine Phenylgruppe bedeuten.

Insbesondere wird in dem erfindungsgemäßen Verfahren eine stereorigide Metallocenverbindung eingesetzt, die ein Ligandsystem aufweist, welches von 4-[$\eta^5$-3'-alkyl-cyclopentadienyl)-4,6,6-trimethyl-($\eta^5$-2-alkyl-4,5-tetrahydropentalen] verschieden ist. Für den Fall, daß in Formel I $M^2$ gleich Kohlenstoff ist und $R^{10}$, $R^{13}$ und $R^{14}$ Methyl sind, ist es bevorzugt, daß mindestens einer der Reste $R^3$, $R^5$, $R^6$, $R^7$ und $R^9$ von Wasserstoff verschieden ist und/oder $R^8$ Wasserstoff ist.

Beispiele für in dem erfindungsgemäßen Verfahren eingesetzte Metallocenverbindungen sind:
[4-($\eta^5$-Cyclopentadienyl)($\eta^5$-4,5-tetrahydropentalen)]-dichlorotitan
[4-($\eta^5$-Cyclopentadienyl)($\eta^5$-4,5-tetrahydropentalen)]-dichlorozirconium
[4-($\eta^5$-Cyclopentadienyl)($\eta^5$-4,5-tetrahydropentalen)]-dichlorohafnium
[4-($\eta^5$-Cyclopentadienyl)-4-methyl-($\eta^5$-4,5-tetrahydropentalen)]-dichlorozirconium
[4-($\eta^5$-Cyclopentadienyl)-4-ethyl-($\eta^5$-4,5-tetrahydropentalen)]-dichlorozirconium
[4-($\eta^5$-Cyclopentadienyl)-4-phenyl-($\eta^5$-4,5-tetrahydropentalen)]-dichlorozirconium
[4-($\eta^5$-Cyclopentadienyl)-6-methyl-6-phenyl-($\eta^5$-4,5-tetrahydropentalen)]-dichlorozirconium
[4-($\eta^5$-Cyclopentadienyl)-4,6-dimethyl-6-phenyl-($\eta^5$-4,5-tetrahydropentalen)]-dichlorozirconium
[4-($\eta^5$-Cyclopentadienyl)-4-ethyl-6-methyl-6-phenyl-($\eta^5$-4,5-tetrahydropentalen)]-dichlorozironium
[4-($\eta^5$-Cyclopentadienyl)-4-phenyl-6-methyl-6-phenyl-($\eta^5$-4,5-tetrahydropentalen)]-dichlorozirconium
[4-($\eta^5$-Cyclopentadienyl)-6,6-diphenyl-($\eta^5$-4,5-tetrahydropentalen)]-dichlorozirconium
[4-($\eta^5$-Cyclopentadienyl)-4-methyl-6,6-diphenyl-($\eta^5$-4,5-tetrahydropentalen)]-dichlorozirconium
[4-($\eta^5$-Cyclopentadienyl)-4,6,6-triphenyl-($\eta^5$-4,5-tetrahydropentalen)]-dichlorozirconium
[4-($\eta^5$-Cyclopentadienyl)-6,6-dimethyl-($\eta^5$-4,5-tetrahydropentalen)]-dichlorozirconium
[4-($\eta^5$-Cyclopentadienyl)-4-phenyl-6,6-dimethyl-($\eta^5$-4,5-tetrahydropentalen)]-dichlorozirconium
[4-($\eta^5$-Cyclopentadienyl)-6-methyl-($\eta^5$-4,5-tetrahydropentalen)]-dichlorozirconium
[4-($\eta^5$-Cyclopentadienyl)-6-butyl-($\eta^5$-4-5-tetrahydropentalen)]-dichlorozirconium
[4-($\eta^5$-Cyclopentadienyl)-6-phenyl-($\eta^5$-4,5-tetrahydropentalen)]-dichlorozirconium
[4-($\eta^5$-Cyclopentadienyl)-4,6-dimethyl-($\eta^5$-4,5-tetrahydropentalen)]-dichlorozirconium
[4-($\eta^5$-Cyclopentadienyl)-4-phenyl-6-methyl-($\eta^5$-4,5-tetrahydropentalen)]-dichlorozirconium
[4-($\eta^5$-Cyclopentadienyl)-4-methyl-6-phenyl-($\eta^5$-4,5-tetrahydropentalen)]-dichlorozirconium
[4-($\eta^5$-Cyclopentadienyl)-4-phenyl-6-phenyl-($\eta^5$-4,5-tetrahydropentalen)]-dichlorozirconium
(4-($\eta^5$-Indenyl)($\eta^5$-4,5-tetrahydropentalen)]-dichlorotitan
[4-($\eta^5$-Indenyl)($\eta^5$-4,5-tetrahydropentalen)]-dichlorozirconium
[4-($\eta^5$-Indenyl)($\eta^5$-4,5-tetrahydropentalen)]-dichlorohafnium
[4-($\eta^5$-Indenyl)-4-methyl-($\eta^5$-4,5-tetrahydropentalen)]-dichlorozirconium
[4-($\eta^5$-Indenyl)-4-phenyl-($\eta^5$-4,5-tetrahydropentalen)]-dichlorozirconium
[4-($\eta^5$-Indenyl)-6-methyl-6-phenyl-($\eta^5$-4,5-tetrahydropentalen)]-dichlorozirconium
[4-($\eta^5$-Indenyl)-4,6-dimethyl-6-phenyl-($\eta^5$-4,5-tetrahydropentalen)]-dichlorozirconium
[4-($\eta^5$-Indenyl)-4-phenyl-6-methyl-6-phenyl-($\eta^5$-4,5-tetrahydropentalen)]-dichlorozirconium
[4-($\eta^5$-Indenyl)-6,6-diphenyl-($\eta^5$-4,5-tetrahydropentalen)]-dichlorozirconium

[4-($\eta^5$-Indenyl)-4-methyl-6,6-diphenyl-($\eta^5$-4,5-tetrahydropentalen)]-dichlorozirconium
[4-($\eta^5$-Indenyl)-4,6,6-triphenyl-($\eta^5$-4,5-tetrahydropentalen)]-dichlorozirconium
[4-($\eta^5$-Indenyl)-6,6-dimethyl-($\eta^5$-4,5-tetrahydropentalen)]-dichlorozirconium
[4-($\eta^5$-Indenyl)-4-ethyl-6,6-dimethyl-($\eta$-4,5-tetrahydropentalen)]-dichlorozirconium
[4-($\eta^5$-Indenyl)-4-phenyl-6,6-dimethyl-($\eta^5$-4,5-tetrahydropentalen)]-dichlorozirconium
[4-($\eta^5$-Indenyl)-6-methyl-($\eta^5$-4,5-tetrahydropentalen)]-dichlorozirconium
[4-($\eta^5$-Indenyl)-6-ethyl-($\eta^5$-4,5-tetrahydropentalen)]-dichlorozirconium
[4-($\eta^5$-Indenyl)-6-phenyl-($\eta^5$-4,5-tetrahydropentalen)]-dichlorozirconium
[4-($\eta^5$-Indenyl)-4,6-dimethyl-($\eta^5$-4,5-tetrahydropentalen)]-dichlorozirconium
[4-($\eta^5$-Indenyl)-4-phenyl-6-methyl-($\eta^5$-4,5-tetrahydropentalen)]-dichlorozirconium
[4-($\eta^5$-Indenyl)-4-methyl-6-phenyl-($\eta^5$-4,5-tetrahydropentalen)]-dichlorozirconium
[4-($\eta^5$-Indenyl)-4-phenyl-6-phenyl-($\eta^5$-4,5-tetrahydropentalen)]-dichlorozirconium
[4-($\eta^5$-Fluorenyl)($\eta^5$-4,5-tetrahydropentalen)]-dichlorotitan
[4-($\eta^5$-Fluorenyl)($\eta^5$-4,5-tetrahydropentalen)]-dichlorozirconium
[4-($\eta^5$-Fluorenyl)($\eta^5$-4,5-tetrahydropentalen)]-dichlorohafnium
[4-($\eta^5$-Fluorenyl)-4-methyl-($\eta^5$-4,5-tetrahydropentalen)]-dichlorozirconium
[4-($\eta^5$-Fluorenyl)-4-phenyl-($\eta^5$-4,5-tetrahydropentalen)]-dichlorozirconium
[4-($\eta^5$-Fluorenyl)-6-methyl-6-phenyl-($\eta^5$-4,5-tetrahydropentalen)]-dichlorozirconium
[4-($\eta^5$-Fluorenyl)-4,6-dimethyl-6-phenyl-($\eta^5$-4,5-tetrahydropentalen)]-dichlorozirconium
[4-($\eta^5$-Fluorenyl)-4-phenyl-6-methyl-6-phenyl-($\eta^5$-4,5-tetrahydropentalen)]-dichlorozirconium
[4-($\eta^5$-Fluorenyl)-6,6-diphenyl-($\eta^5$-4,5-tetrahydropentalen)]-dichlorozirconium
[4-($\eta^5$-Fluorenyl)-4-methyl-6,6-diphenyl-($\eta^5$-4,5-tetrahydropentalen)]-dichlorozirconium
[4-($\eta^5$-Fluorenyl)-4,6,6-triphenyl-($\eta^5$-4,5-tetrahydropentalen)]-dichlorozirconium
[4-($\eta^5$-Fluorenyl)-6,6-dimethyl-($\eta^5$-4,5-tetrahydropentalen)]-dichlorozirconium
[4-($\eta^5$-Fluorenyl)-4-phenyl-6,6-dimethyl-($\eta^5$-4,5-tetrahydropentalen)]-dichlorozirconium
[4-($\eta^5$-Fluorenyl)-6-methyl-($\eta^5$-4,5-tetrahydropentalen)]-dichlorozirconium
[4-($\eta^5$-Fluorenyl)-6-phenyl-($\eta^5$-4,5-tetrahydropentalen)]-dichlorozirconium
[4-($\eta^5$-Fluorenyl)-4,6-dimethyl-($\eta^5$-4,5-tetrahydropentalen)]-dichlorozirconium
[4-($\eta^5$-Fluorenyl)-4-phenyl-6-methyl-($\eta^5$-4,5-tetrahydropentalen)]-dichlorozirconium
[4-($\eta^5$-Fluorenyl)-4-methyl-6-phenyl-($\eta^5$-4,5-tetrahydropentalen)]-dichlorozirconium
[4-($\eta^5$-Fluorenyl)-4-phenyl-6-phenyl-($\eta^5$-4,5-tetrahydropentalen)]-dichlorozirconium
[4-($\eta^5$-3,5,6,7-tetrahydroindenyl)($\eta^5$-4,5-tetrahydropentalen)]-dichlorotitan
[4-($\eta^5$-4,5,6,7-tetrahydroindenyl)($\eta^5$-4,5-tetrahydropentalen)]-dichlorozirconuim
[4-($\eta^5$-4,5,6,7-tetrahydroindenyl)($\eta^5$-4,5-tetrahydropentalen)]-dichlorohafnium
[4-($\eta^5$-4,5,6,7-tetrahydroindenyl)-4-methyl-($\eta^5$-4,5-tetrahydropentalen)]-dichlorozirconium
[4-($\eta^5$-4,5,6,7-tetrahydroindenyl)-4-phenyl-($\eta^5$-4,5-tetrahydropentalen)]-dichlorozirconium
[4-($\eta^5$-4,5,6,7-tetrahydroindenyl)-6-methyl-6-phenyl-($\eta^5$-4,5-tetrahydropentalen)]-dichlorozirconium
[4-($\eta^5$-4,5,6,7-tetrahydroindenyl)-4,6-dimethyl-6-phenyl-($\eta^5$-4,5-tetrahydropentalen)]-dichlorozirconium
[4-($\eta^5$-4,5,6,7-tetrahydroindenyl)-4-phenyl-6-methyl-6-phenyl-($\eta^5$-4,5-tetrahydropentalen)]-dichlorozirconium
[4-($\eta^5$-4,5,6,7-tetrahydroindenyl)-6,6-diphenyl-($\eta^5$-4,5-tetrahydropentalen)]-dichlorozirconium
[4-($\eta^5$-4,5,6,7-tetrahydroindenyl)-4-methyl-6,6-diphenyl-($\eta^5$-4,5-tetrahydropentalen)]-dichlorozirconium
[4-($\eta^5$-4,5,6,7-tetrahydroindenyl)-4,6,6-triphenyl-($\eta^5$-4,5-tetrahydropentalen)]-dichlorozirconium
[4-($\eta^5$-4,5,6,7-tetrahydroindenyl)-6,6-dimethyl-($\eta^5$-4,5-tetrahydropentalen)]-dichlorozirconium
[4-($\eta^5$-4,5,6,7-tetrahydroindenyl)-4-ethyl-6,6-dimethyl-($\eta^5$-4,5-tetrahydropentalen)]-dichlorozirconium
[4-($\eta^5$-4,5,6,7-tetrahydroindenyl)-4-phenyl-6,6-dimethyl-($\eta^5$-4,5-tetrahydropentalen)]-dichlorozirconium
[4-($\eta^5$-4,5,6,7-tetrahydroindenyl)-6-methyl-($\eta^5$-4,5-tetrahydropentalen)]-dichlorozirconium
[4-($\eta^5$-4,5,6,7-tetrahydroindenyl)-6-phenyl-($\eta^5$-4,5-tetrahydropentalen)]-dichlorozirconium
[4-($\eta^5$-4,5,6,7-tetrahydroindenyl)-4,6-dimethyl-($\eta^5$-4,5-tetrahydropentalen)]-dichlorozirconium
[4-($\eta^5$-4,5,6,7-tetrahydroindenyl)-4-phenyl-6-methyl-($\eta^5$-4,5-tetrahydropentalen)]-dichlorozirconium
[4-($\eta^5$-4,5,6,7-tetrahydroindenyl)-4-methyl-6-phenyl-($\eta^5$-4,5-tetrahydropentalen)]-dichlorozirconium
[4-($\eta^5$-4,5,6,7-tetrahydroindenyl)-4-phenyl-6-phenyl-($\eta^5$-4,5-tetrahydropentalen)]-dichlorozirconium
[4-($\eta^5$-3'-Methyl-cyclopentadienyl)-($\eta^5$-4,5-tetrahydropentalen)]-dichlorozirconium
[4-($\eta^5$-3'-isopropyl-cyclopentadienyl)-($\eta^5$-4,5-tetrahydropentalen)]-dichlorozirconium
[4-($\eta^5$-3'-Benzyl-cyclopentadienyl)-($\eta^5$-4,5-tetrahydropentalen)]-dichlorozirconium
[4-($\eta^5$-3'-Methyl-cyclopentadienyl)-4-methyl-($\eta^5$-4,5-tetrahydropentalen)]-dichlorozirconium
[4-($\eta^5$-3'-isopropyl-cyclopentadienyl)-4-methyl-($\eta^5$-4,5-tetrahydropentalen)]-dichlorozirconium
[4-($\eta^5$-3'-Benzyl-cyclopentadienyl)-4-methyl-($\eta^5$-4,5-tetrahydropentalen)]-dichlorozirconium
[4-($\eta^5$-3'-Methyl-cyclopentadienyl)-4-phenyl-($\eta^5$-4,5-tetrahydropentalen)]-dichlorozirconium
[4-($\eta^5$-3'-isopropyl-cyclopentadienyl)-4-phenyl-($\eta^5$-4,5-tetrahydropentalen)]-dichlorozirconium

[4-($\eta^5$-3'-Benzyl-cyclopentadienyl)-4-phenyl-($\eta^5$-4,5-tetrahydropentalen)]-dichlorozirconium
[4-($\eta^5$-3'-Methyl-cyclopentadienyl)-4,6-dimethyl-($\eta^5$-4,5-tetrahydropentalen)]-dichlorozirconium
[4-($\eta^5$-3'-isopropyl-cyclopentadienyl)-4,6-dimethyl-($\eta^5$-4,5-tetrahydropentalen)]-dichlorozirconium
[4-($\eta^5$-3'-Benzyl-cyclopentadienyl)-4,6-dimethyl-($\eta^5$-4,5-tetrahydropentalen)]-dichlorozirconium
[4-($\eta^5$-3'-Methyl-cyclopentadienyl)-4-methyl-6-phenyl-($\eta^5$-4,5-tetrahydropentalen)]-dichlorozirconium
[4-($\eta^5$-3'-isopropyl-cyclopentadienyl)-4-methyl-6-phenyl-($\eta^5$-4,5-tetrahydropentalen)]-dichlorozirconium
[4-($\eta^5$-3'-Benzyl-cyclopentadienyl)-4-methyl-6-phenyl-($\eta^5$-4,5-tetrahydropentalen)]-dichlorozirconium
[4-($\eta^5$-3'-Methyl-cyclopentadienyl)-4,6-dimethyl-6-phenyl-($\eta^5$-4,5-tetrahydropentalen)]-dichlorozirconium
[4-($\eta^5$-3'-isopropyl-cyclopentadienyl)-4,6-dimethyl-6-phenyl-($\eta^5$-4,5-tetrahydropentalen)]-dichlorozirconium
[4-($\eta^5$-3'-Benzyl-cyclopentadienyl)-4,6-dimethyl-6-phenyl-($\eta^5$-4,5-tetrahydropentalen)]-dichlorozirconium
[4-($\eta^5$-3'-Methyl-cyclopentadienyl)-2-methyl-($\eta^5$-4,5-tetrahydropentalen)]-dichlorozirconium
[4-($\eta^5$-3'-isopropyl-cyclopentadienyl)-2-isopropyl-($\eta^5$-4,5-tetrahydropentalen)]-dichlorozirconium
[4-($\eta^5$-3'-Benzyl-cyclopentadienyl)-2-benzyl-($\eta^5$-4,5-tetrahydropentalen)]-dichlorozirconium
[4-($\eta^5$-3'-isopropyl-cyclopentadienyl)-2-benzyl-($\eta^5$-4,5-tetrahydropentalen)]-dichlorozirconium
[4-($\eta^5$-3'-benzyl-cyclopentadienyl)-2-isopropyl-($\eta^5$-4,5-tetrahydropentalen)]-dichlorozirconium
[4-($\eta^5$-3'-Methyl-cyclopentadienyl)-2,4-dimethyl-($\eta^5$-4,5-tetrahydropentalen)]-dichlorozirconium
[4-($\eta^5$-3'-isopropyl-cyclopentadienyl)-2-isopropyl-4-methyl-($\eta^5$-4,5-tetrahydropentalen)]-dichlorozirconium
[4-($\eta^5$-3'-Benzyl-cyclopentadienyl)-2-benzyl-4-methyl-($\eta^5$-4,5-tetrahydropentalen)]-dichlorozirconium
[4-($\eta^5$-3'-isopropyl-cyclopentadienyl)-2-benzyl-4-methyl-($\eta^5$-4,5-tetrahydropentalen)]-dichlorozirconium
[4-($\eta^5$-3'-benzyl-cyclopentadienyl)-2-isopropyl-4-methyl-($\eta^5$-4,5-tetrahydropentalen)]-dichlorozirconium

Die Benennung der voranstehend genannten Metallocen-Verbindungen soll anhand der Verbindung [4-($\eta^5$-3'-Isopropyl-cyclopentadienyl)-6-phenyl-($\eta^5$-4,5-tetrahydropentalen)]-dichlorozirconium veranschaulicht werden.

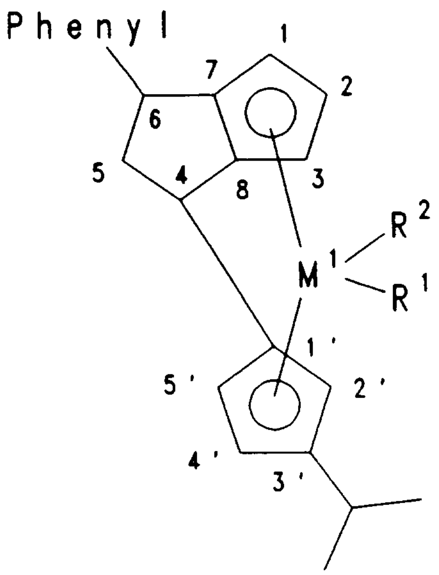

Die Herstellung der in dem erfindungsgemäßen Verfahren eingesetzten Metallocene soll durch das nachfolgende Reaktionsschema anhand von Metallocenen der Formel VI veranschaulicht werden. Dabei bedeutet $M^4$ ein Metall der Hauptgruppe Ia, IIa oder IIIa des Periodensystems der Elemente.

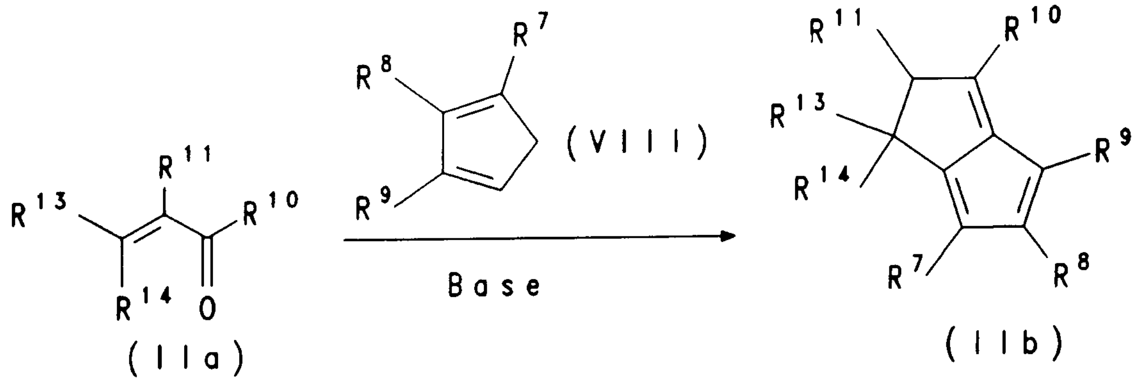


(IIa) (VIII) (IIb)

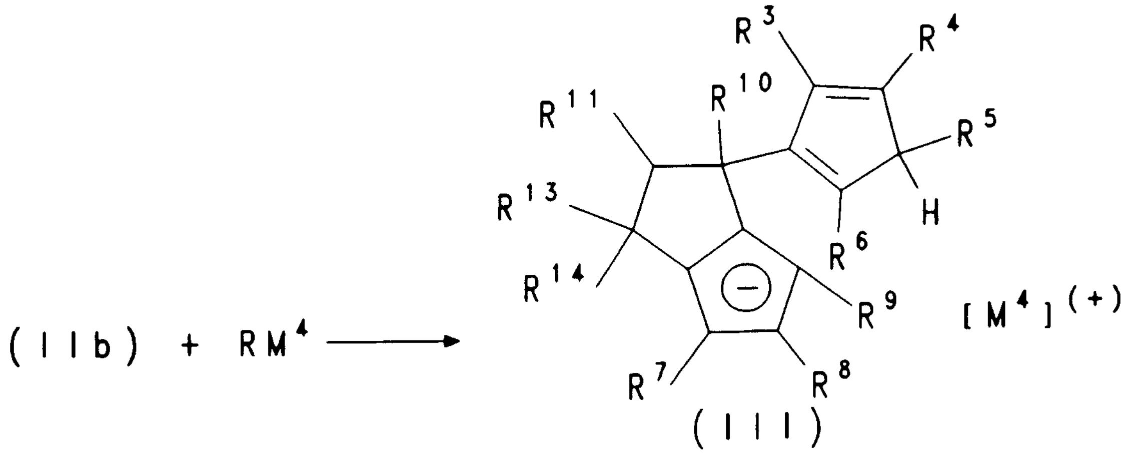

(IIb) + $RM^4$

$[M^4]^{(+)}$

(III)

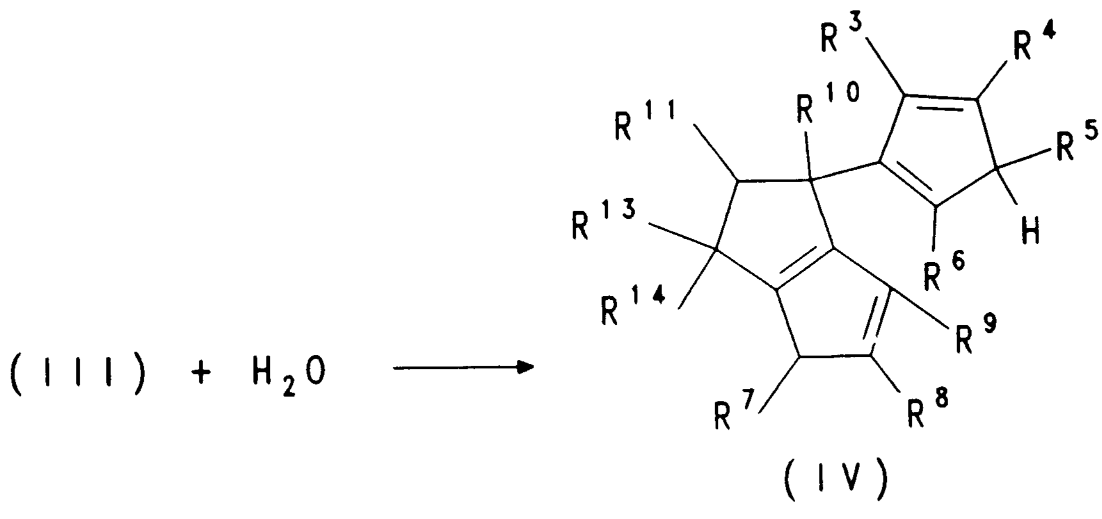

(III) + $H_2O$

(IV)

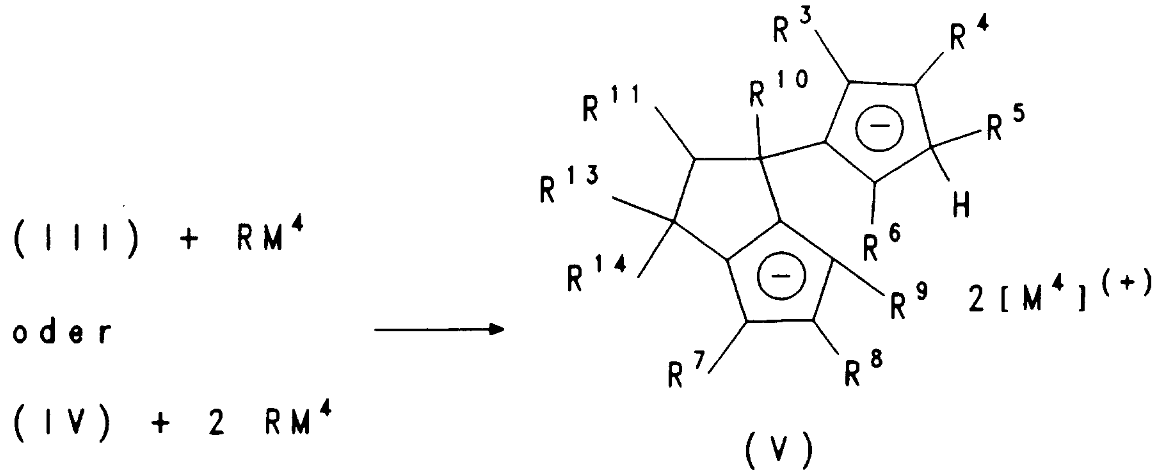


(V)

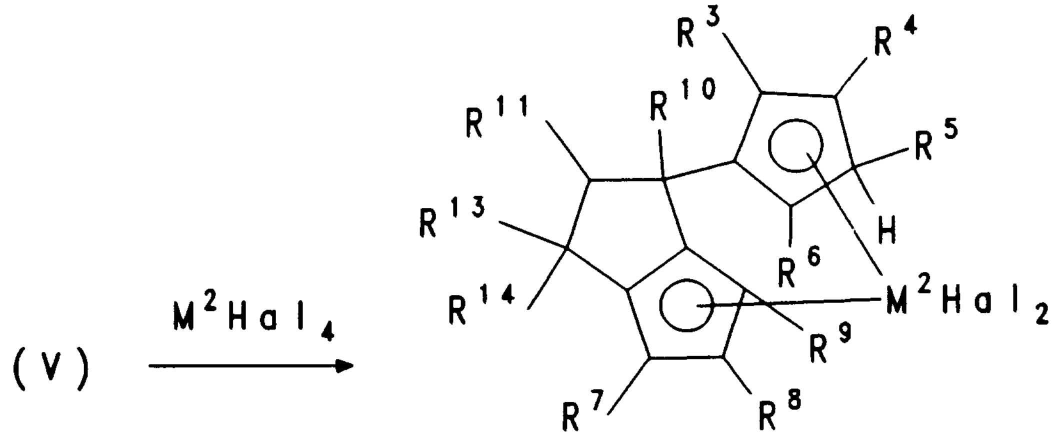


(VI)

Die Verbindungen der Formel IIb können aus α,β-ungesättigten Ketonen (Chem. Ber. 123, 549 (1990), J. Org. Chem. 54, 4981 (1989)) nach literaturbekannten Methoden hergestellt werden.

Die Umsetzung der Verbindung der Formel IIb zu dem Ligandsystem III erfolgt durch Umsetzung mit einer metallorganischen Verbindung (wie z.B. Cyclopentadienyllithium, Indenyllithium, Fluorenyllithium) oder Grignardreagenzien.

Die Salze der Formel III können direkt zu den entsprechenden Dianion-Verbindungen der Formel V durch Deprotonierung mit beispielsweise Butyllithium umgesetzt werden. Die Hydrolyse von Verbindung III führt zur Bildung der Biscyclopentadien-Verbindung IV, welche als Konstitutionsisomerengemisch anfällt und chromatographisch gereinigt werden kann. Durch zweifache Deprotonierung von IV mit beispielsweise Butyllithium wird die Dianion-Verbindung der Formel V gebildet.

Metallocene der Formel VI können mit Organometallverbindungen wie Grignard-Reagenzien oder Kohlenwasserstoff-Lithium-Reagenzien zu Metallocenen der Formel I umgesetzt werden, in denen $R^1$ und $R^2$ ungleich Halogen sind. Die Umsetzung zu den verbrückten Metallocenen der Formel VI sowie die Isolierung der gewünschten Komplexe ist im Prinzip bekannt. Hierzu wird das Dianion der Formel V in einem inerten Lösungsmittel mit dem entsprechenden Metallhalogenid wie z.B. Zirkoniumtetrachlorid umgesetzt. Die Metallocene der Formel VI können auch direkt aus den Difulvenen der Formel II ohne Isolierung der Zwischenstufen synthetisiert werden.

Geeignete Lösungsmittel sind aliphatische oder aromatische Lösemittel, wie beispielsweise Hexan oder Toluol, etherische Lösemittel, wie beispielsweise Tetrahydrofuran oder Diethylether oder halogenierte Kohlenwasserstoffe, wie beispielsweise Methylenchlorid oder halogenierte aromatische Kohlenwasserstoffe wie beispielsweise o-Dichlorbenzol.

Eine weitere Möglichkeit zur Darstellung der erfindungsgemäßen Metallocenverbindungen besteht in der Reaktion des Ligandvorläufers VII mit dem Cyclopentadien VIII, welche beide jeweils nach literaturbekannten Vorschriften hergestellt werden können. Die Verbindungen IX können nach einer in der Literatur bekannten Vorschrift thermisch zu den Ligandvorläufern X cyclisiert werden (Chem. Ber. 120, 1611 (1987)). Die Umsetzung von X zu XI erfolgt mit einer organometallischen Verbindung (wie z.B. Cyclopentadienyllithium, Indenyllithium, Fluorenyllithium) oder Grignardreagenzien.

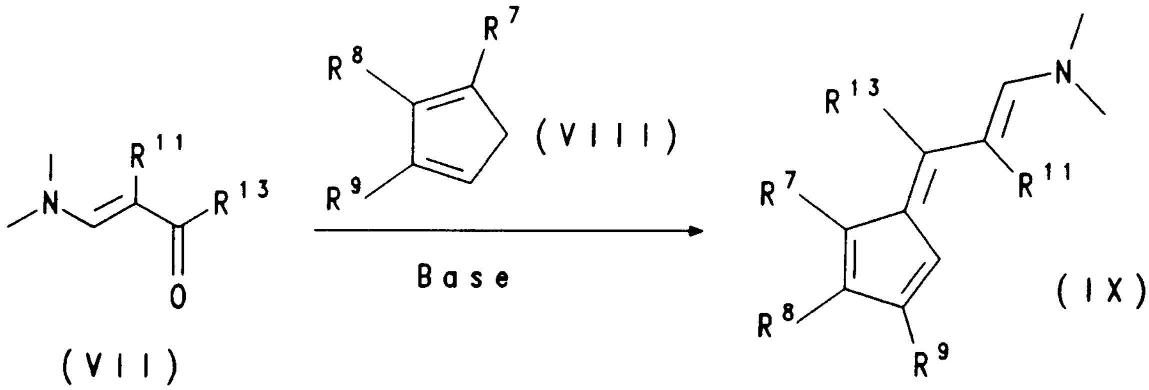


(VII) (VIII) (IX)

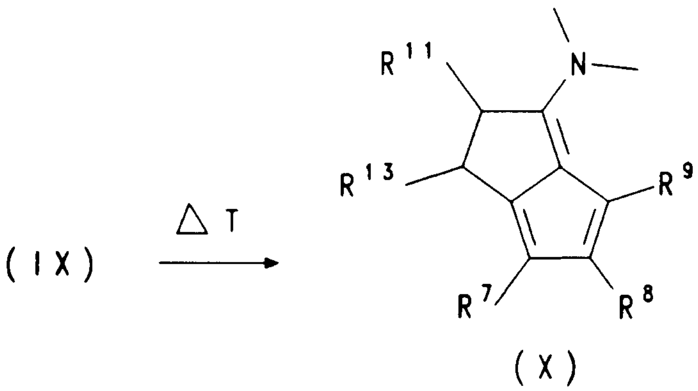


(IX) (X)

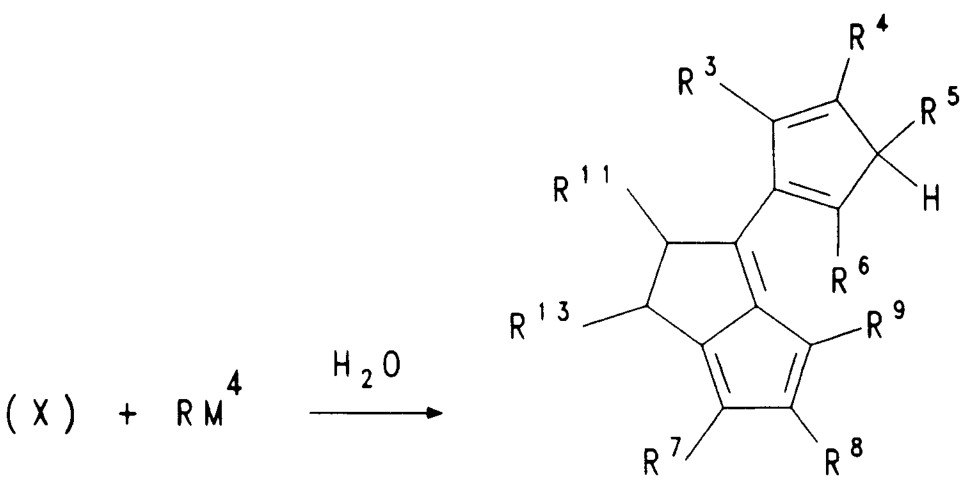


(X) + $RM^4$ (XI)

Die Dianionverbindung der Formel Va kann direkt durch Umsetzung von X mit einem metallorganischen Reagenz erhalten werden (wie z.B. Phenyllithium, Methyllithium, n-Butyllithium oder Grignardreagenzien). Die Hydrolyse von Va mit Wasser führt zur Generierung der Ligandvorläufer IV.

Die Umsetzung zu den verbrückten Metallocenen der Formel VIa sowie die Isolierung der gewünschten Komplexe

ist im Prinzip bekannt. Hierzu wird das Dianion der Formel Va in einem inertem Lösungsmittel mit dem entsprechenden Metallhalogenid wie z.B. Zirkoniumtetrachlorid umgesetzt. Die Metallocene der Formel VIa können auch direkt aus den Fulvenen der Struktur X ohne Isolierung der Zwischenstufen synthetisiert werden.

Geeignete Lösungsmittel sind aliphatische oder aromatische Lösemittel, wie beispielsweise Hexan oder Toluol, etherische Lösungsmittel, wie beispielsweise Tetrahydrofuran oder Diethylether oder halogenierte Kohlenwasserstoffe, wei beispielsweise Methylenchlorid oder halogenierte aromatische Kohlenwasserstoffe wie beispielsweise o-Dichlorbenzol.

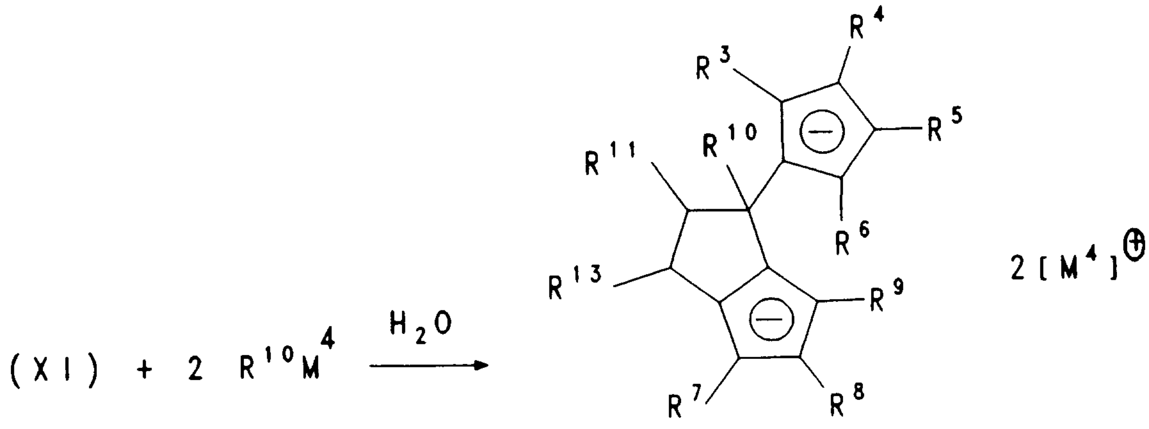


(Va)

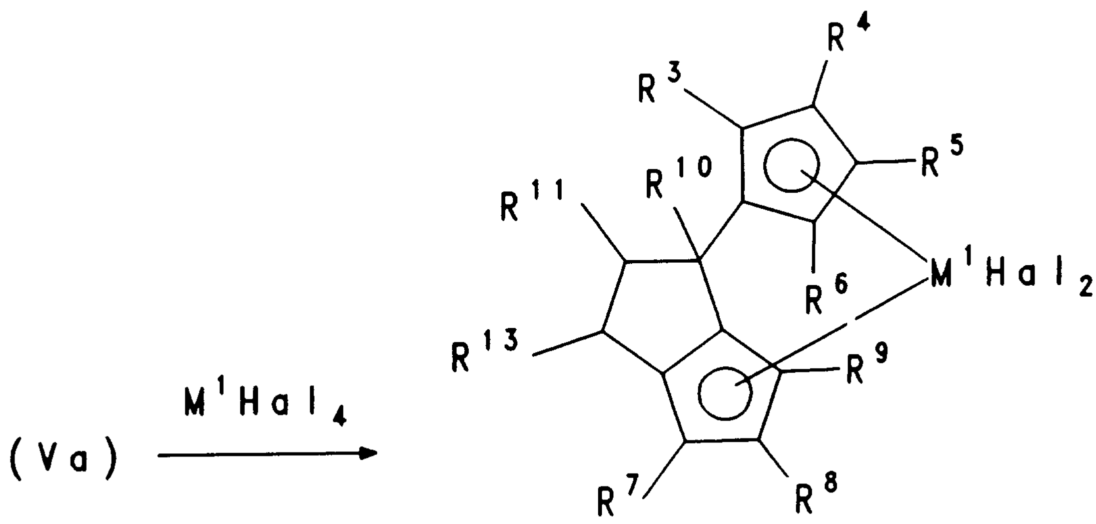


(VIa)

Die Biscyclopentadienyl-Verbindungen der Formel IV, bei welchen mindestens einer der Reste $R^3$ bis $R^6$ sowie mindestens einer der Reste $R^7$ bis $R^9$ Wasserstoff ist, und mindestens einer der Reste $R^3$ bis $R^9$ von Wasserstoff verschieden ist, können durch literaturbekannte Methoden zu den Fulvenen der Formel IVb bzw. IVc umgesetzt werden. Dies soll durch das nachfolgende Reaktionsschema veanschaulicht werden, wobei $R^{16}$, $R^{17}$, $R^{19}$ und $R^{20}$ gleich oder verschieden sind und wie $R^{10}$ definiert sind.

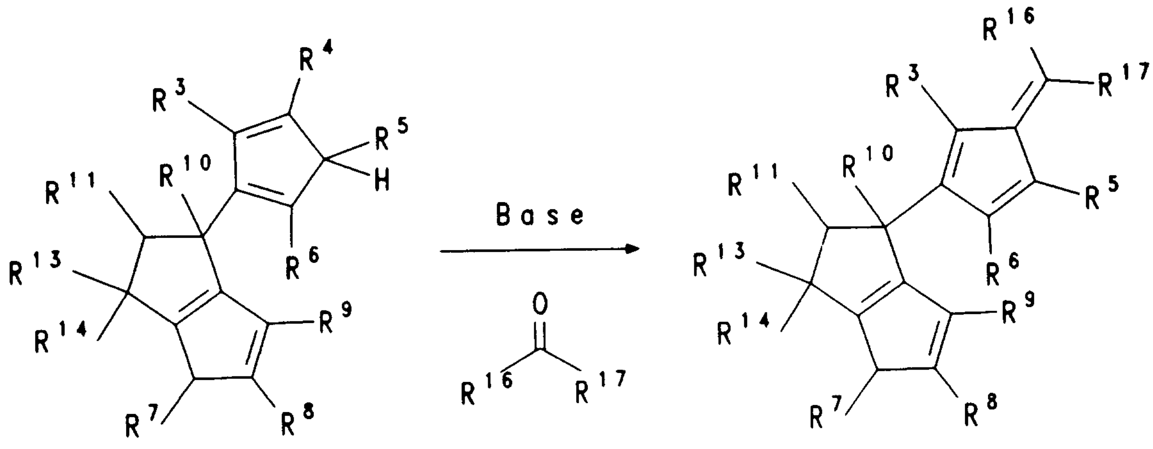


(IV) (IVb)

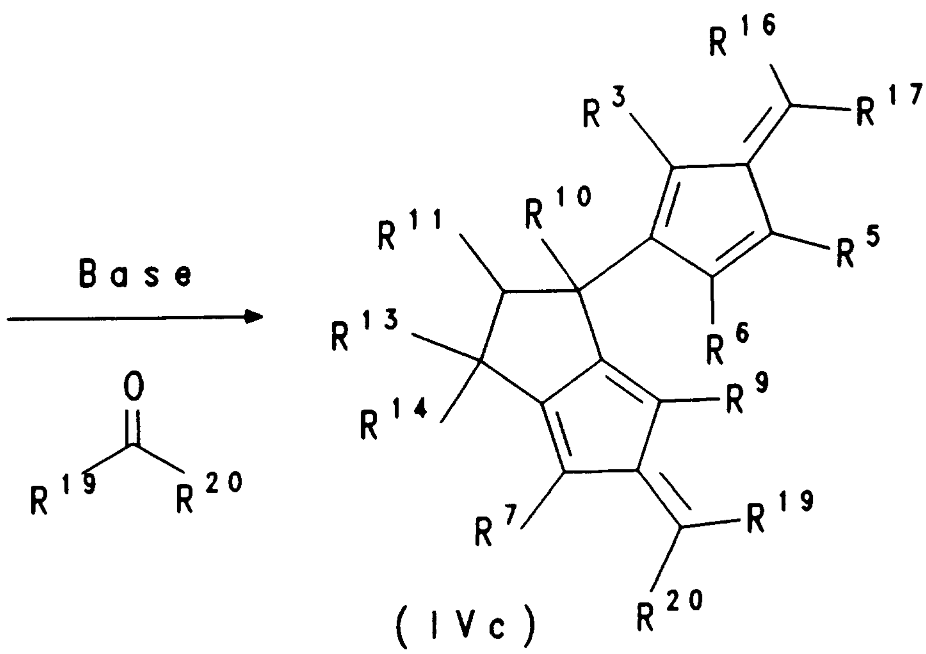


(IVc)

Durch Umsetzung des Fulvens IVb mit metallorganischen Verbindungen der Formel $R^{18}M^5$ (wobei $R^{16}$, $R^{17}$, $R^{18}$, $R^{19}$ und $R^{20}$ gleich oder verschieden sind und wie $R^{10}$ definiert sind; $M^5$ wie $M^4$ definiert ist) führt zur Bildung der Monoanion-Verbindung III. Die Verwendung von zwei Äquivalenten $R^{18}M^5$ führt direkt zur Bildung der Dianion-Verbindung Vb.

(IVb) + $R^{18}M^5$

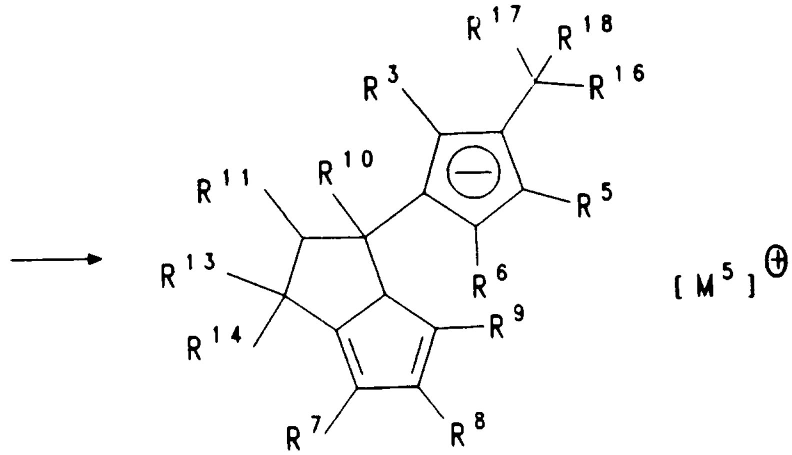

(III)

(IVb) + 2 $R^{18}M^5$

oder

(IIIb) + $R^{18}M^5$

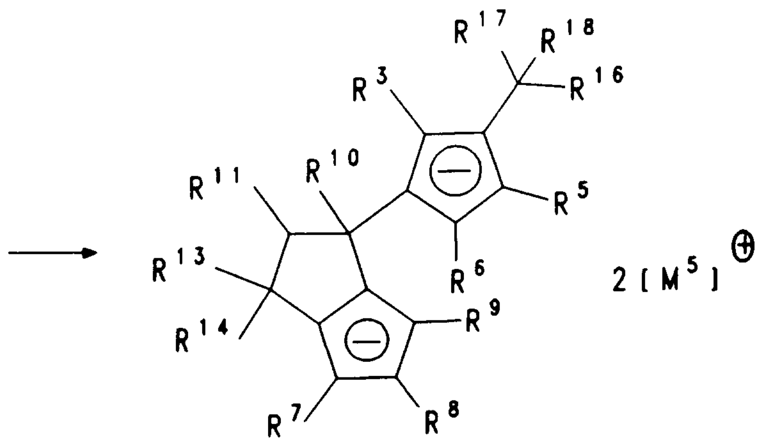

(Vb)

Die Umsetzung des Fulvens IVc führt entsprechend der Umsetzung von IVa zur Bildung der Dianionverbindung Vc.

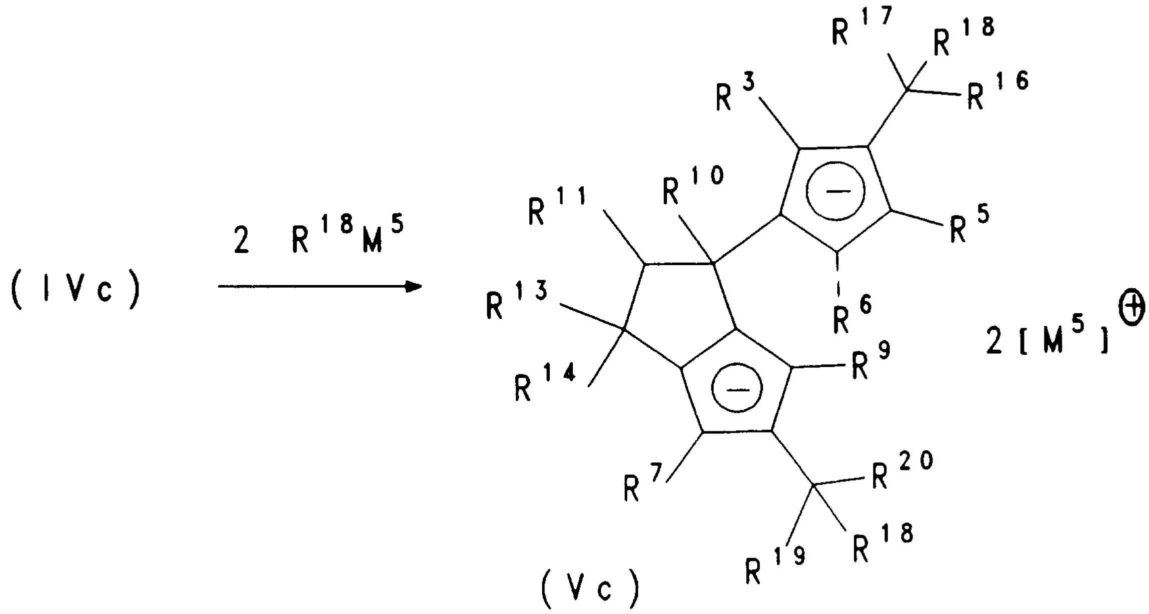


(IVc) (Vc)

Die Biscyclopentadienyl-Anionen der Formel V, können mit Verbindungen

| | |
|---|---|
| $R^{21}{}_pM^6X$ | umgesetzt werden, worin |
| $M^6$ | ein Element der III.-V. Hauptgruppe ist, |
| X | eine Abgangsgruppe wie Halogen, Tosylat, Triflat ist, |
| $R^{21}$ | wie $R^{10}$ definiert ist, und |
| p | eine ganze Zahl von 1 bis 5 ist. |

Dies soll durch das nachfolgende Reaktionsschema veranschaulicht werden:

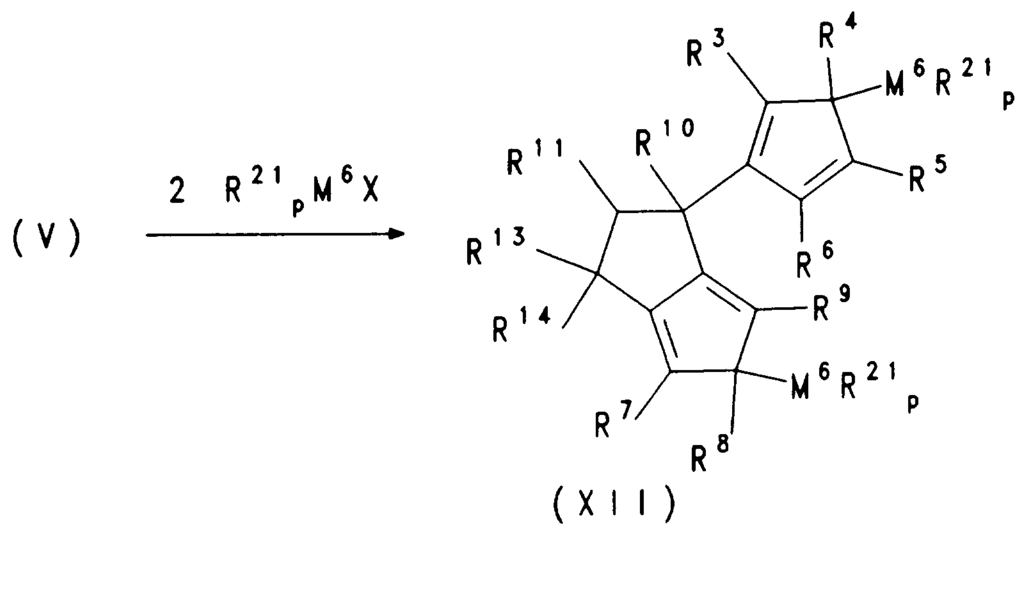


(V) (XII)

Die Verbindungen der Formel XII, bei welchen mindestens einer der Reste $R^3$ bis $R^6$ sowie mindestens einer der Reste $R^7$ bis $R^9$ Wasserstoff ist, können zu den erfindungsgemäßen Metallocenen umgesetzt werden. $R^{12}$ ist in den Verbindungen der Formeln IIb, III, IV, V, VI, X, XI, Va, VIa, IVb, IVc, Vb, Vc und XII gleich Wasserstoff. $R^{14}$ ist in den Verbindungen der Formeln X, XI, Va und VIa gleich Wasserstoff. Die Salze der Formel IIIb können direkt zu den entsprechenden Dianion-Verbindungen der Formel Va durch Deprotonierung mit beispielsweise Butyllithium umgesetzt werden. Die Umsetzung zu den verbrückten Metallocenen der Formel I erfolgt entsprechend der Reaktion von V nach VI.

Die erfindungsgemäßen Metallocene sind hochaktive Katalysatorkomponenten für die Cycloolefincopolymerisation. Je nach Substitutionsmuster der Liganden können die Metallocene als Isomerengemisch anfallen. Die Metallocene werden bevorzugt isomerenrein eingesetzt. Die Verwendung des Racemats ist in den meisten Fällen ausreichend.

Verwendet werden kann aber auch das reine Enantiomere in der (+)- oder (-)-Form. Mit den reinen Enantiomeren ist ein optisch aktives Polymer herstellbar. Getrennt werden sollten jedoch die konfigurationsisomeren Formen der Metallocene, da das polymerisationsaktive Zentrum (das Metallatom) in diesen Verbindungen ein Polymer mit anderen Eigenschaften erzeugt. Für bestimmte Anwendungen, beispielsweise weiche Formkörper, kann dies durchaus wünschenswert sein.

Bevorzugt wird eine Metallocenverbindung und ein Cokatalysator eingesetzt. Es können auch Mischungen von zwei oder mehr Metallocenverbindungen verwendet werden, insbesondere zur Herstellung von Reaktorblends oder von Cycloolefincopolymeren mit breiter oder multimodaler Molmassenverteilung.

In dem erfindungsgemäßen Verfahren wird als Cokatalysator bevorzugt ein Aluminoxan eingesetzt, welches vorzugsweise die Formel XIIIa für den linearen Typ und/oder die Formel XIIIb für den cyclischen Typ aufweist,

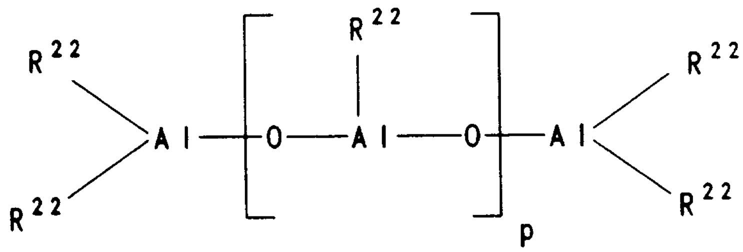

(XIIIa)

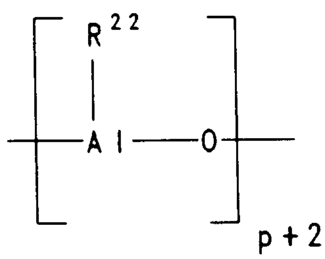

(XIIIb)

wobei in den Formeln XIIIa und XIIIb die Reste $R^{22}$ gleich oder verschieden sind und eine $C_1$-$C_6$-Alkylgruppe, eine $C_6$-$C_{18}$-Arylgruppe, Benzyl oder Wasserstoff bedeuten, und p eine ganze Zahl von 2 bis 50, bevorzugt 10 bis 35 bedeutet.

Bevorzugt sind die Reste $R^{22}$ gleich und bedeuten Methyl, Isobutyl, Phenyl oder Benzyl, besonders bevorzugt Methyl.

Sind die Reste $R^{22}$ verschieden, so sind sie bevorzugt Methyl und Wasserstoff oder alternativ Methyl und Isobutyl, wobei Wasserstoff oder Isobutyl bevorzugt mit einen zahlenmäßigen Anteil von 0,01 - 40% (der Reste $R^{22}$) enthalten sind.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z.B. Toluol) umgesetzt wird. Zur Herstellung eines Aluminoxans mit verschiedenen Alkylgruppen $R^{13}$ werden entsprechend der gewünschten Zusammensetzung zwei verschiedene Aluminiumtrialkyle ($AlR_3$ + $AlR'_3$) mit Wasser umgesetzt (S. Pasynkiewicz, Polyhedron 9 (1990) 429, EP-A 302 424).

Die genaue räumliche Struktur der Aluminoxane ist nicht bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist auch möglich, das Aluminoxan auf einen Träger aufzubringen und es dann als Suspension in geträgerter Form einzusetzen. Es sind mehrere Trägerungsverfahren bekannt (EP 92107331.8), z.B. kann Kieselgel als Träger fungieren.

Es ist möglich, das Metallocen vor dem Einsatz in der Polymerisationsreaktion mit einem Cokatalysator, insbesondere einem Aluminoxan vorzuaktivieren. Dadurch wird die Polymerisationsaktivität deutlich erhöht.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von $10^{-4}$ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78°C bis 100°C, vorzugsweise 0 bis 70°C.

Mit Hilfe des Metallocens kann eine Vorpolymerisation erfolgen. Zur Vorpolymerisation wird bevorzugt das (oder eines der) in der Polymerisation eingesetzte(n) Olefin(e) verwendet.

Das Metallocen kann auch auf einen Träger aufgebracht werden. Geeignete Träger sind beispielsweise Silikagele, Aluminiumoxide, festes Aluminoxan oder andere anorganische Trägermaterialien. Ein geeignetes Trägermaterial ist auch ein Polyolefinpulver in feinverteilter Form.

Eine weitere mögliche Ausgestaltung des erfindungsgemäßen Verfahrens besteht darin, daß man an Stelle oder neben eines Aluminoxans eine salzartige Verbindung der Formel $R_xNH_{4-x}BR'_4$ oder der Formel $R_3PHBR'_4$ als Cokatalysator verwendet. Dabei sind x = 1, 2 oder 3, R = Alkyl oder Aryl, gleich oder verschieden, und R' = Aryl, das auch fluoriert oder teilfluoriert sein kann. In diesem Fall besteht der Katalysator aus dem Reaktionsprodukt eines Metallocens mit einer der genannten Verbindungen (EP-A 277 004).

Falls dem Reaktionsgemisch Lösemittel zugesetzt wird, dann handelt es sich um gebräuchliche inerte Lösemittel wie z.B. aliphatische oder cycloaliphatische Kohlenwasserstoffe, Benzin- bzw. hydrierte Dieselölfraktionen oder Toluol.

Die Metallocene werden bevorzugt in Form ihrer Racemate eingesetzt. Die Metallocenverbindung wird bevorzugt in einer Konzentration, bezogen auf das Übergangsmetall, von $10^{-3}$ bis $10^{-8}$, vorzugsweise $10^{-4}$ bis $10^{-7}$ mol Übergangsmetall pro $dm^3$ Reaktorvolumen angewendet. Das Aluminoxan wird in einer Konzentration von $10^{-4}$ bis $10^{-1}$, vorzugsweise $10^{-4}$ bis $2 * 10^{-2}$ mol pro $dm^3$ Reaktorvolumen verwendet, bezogen auf den Gehalt an Aluminium. Prinzipiell sind aber auch höhere Konzentrationen möglich.

Die Polymerisation kann im flüssigen Cycloolefin selbst oder in Cycloolefin-Lösung durchgeführt, wobei zweckmäßigerweise der Druck oberhalb 1 bar liegt.

Das in dem erfindungsgemäßen Verfahren eingesetzte cyclische Olefin kann mono- oder polycyclisch sein, bevorzugt ist es polycyclisch. Das in dem erfindungsgemäßen Verfahren eingesetzte acyclische Olefin ist vorzugsweise ein 1-Olefin mit bevorzugt 2 bis 40 C-Atomen.

In dem erfindungsgemäßen Verfahren wird bevorzugt mindestens ein polycyclisches Olefin, bevorzugt der Formeln XIV, XV, XVI, XVII, XVIII oder XIX eingesetzt

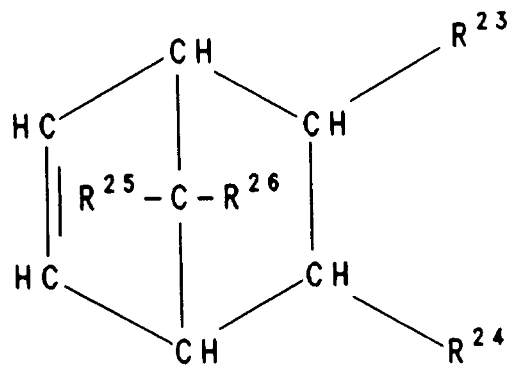

(XIV).

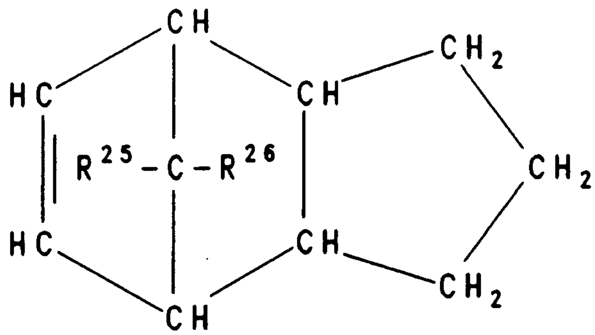

(XV),

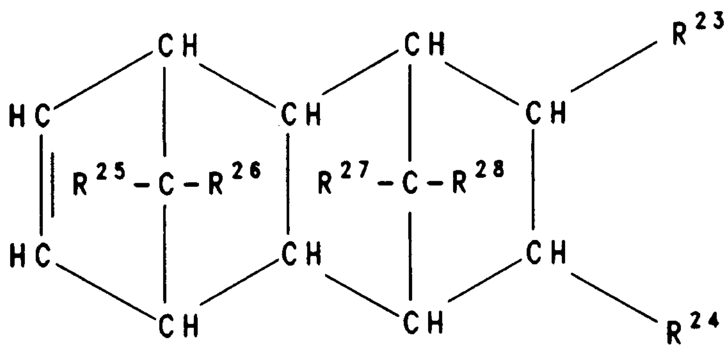

(XVI),

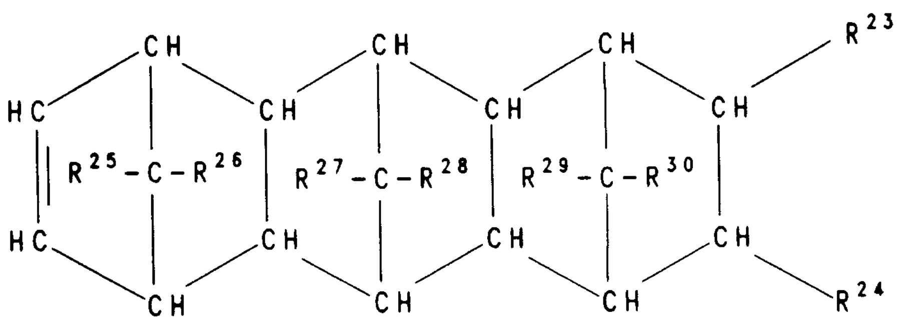

(XVII),

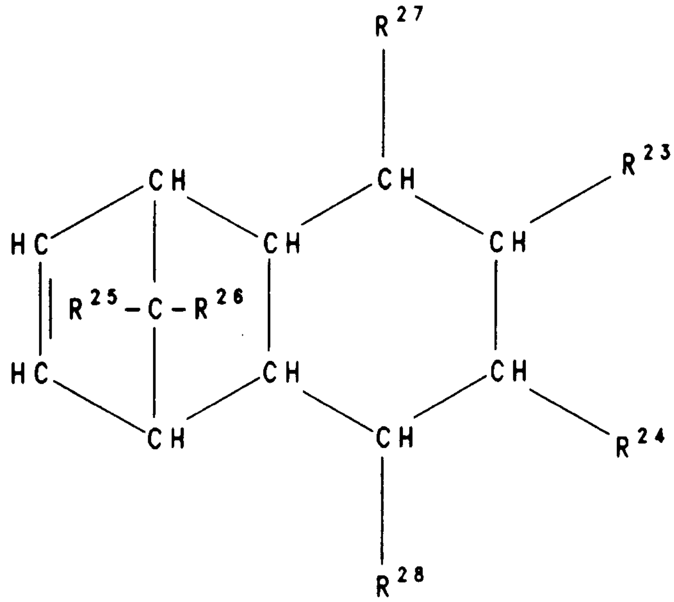

(XVIII),

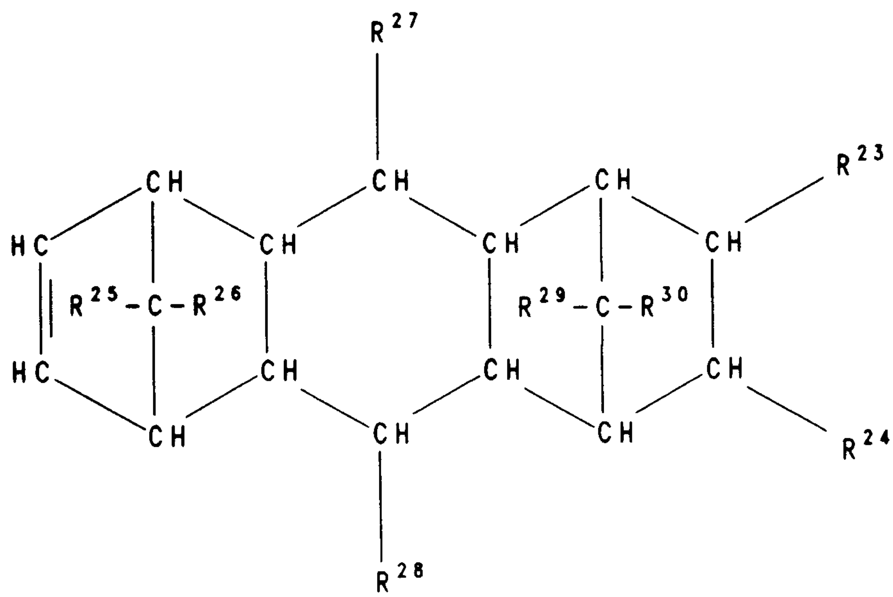

(XIX),

,worin $R^{23}$, $R^{24}$, $R^{25}$, $R^{26}$, $R^{27}$, $R^{28}$, $R^{29}$ und $R^{30}$ gleich oder verschieden sind und ein Wasserstoffatom oder einen $C_1$-$C_{40}$-Kohlenwasserstoffrest bedeuten, wobei gleiche Reste in den verschiedenen Formeln eine unterschiedliche Bedeutung haben können. Besonders bevorzugt wird mindestens ein Cycloolefin der Formeln XIV oder XVI eingesetzt, worin $R^{23}$, $R^{24}$, $R^{25}$, $R^{26}$, $R^{27}$, $R^{28}$, $R^{29}$ und $R^{30}$ gleich oder verschieden sind und ein Wasserstoffatom oder einen $C_1$-$C_{40}$-Kohlenwasserstoffrest, insbesondere einen $C_6$-$C_{20}$-Arylrest oder einen $C_1$-$C_{10}$-Alkylrest bedeuten, wobei gleiche Reste in den verschiedenen Formeln eine unterschiedliche Bedeutung haben können.

Das in dem erfindungsgemäßen Verfahren eingesetzte acylische Olefin hat bevorzugt die Formel XX

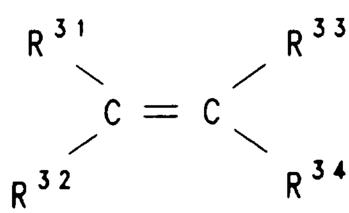

(XX),

worin $R^{31}$, $R^{32}$, $R^{33}$ und $R^{34}$ gleich oder verschieden sind und ein Wasserstoffatom oder einen $C_1$-$C_{20}$-Kohlenwasserstoffrest, bevorzugt einen $C_6$-$C_{10}$-Arylrest und einen $C_1$-$C_{10}$-Alkylrest bedeuten. Bevorzugt sind Ethylen und Propylen.

Gegebenenfalls wird auch ein monocyclisches Olefin der Formel XXI

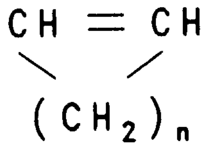

(XXI),

worin n eine Zahl von 2 bis 10 ist, verwendet.

Insbesondere werden Copolymere von polycyclischen Olefinen, vorzugsweise der Formeln XIV und XVI, mit Ethylen hergestellt.

Besonders bevorzugte polycyclische Olefine sind Norbornen und Tetracyclododecen, wobei diese durch ($C_1$-$C_6$)-Alkyl substituiert sein können. Sie werden vorzugsweise mit Ethylen copolymerisiert; besondere Bedeutung besitzen Ethylen/Norbornen-Copolymere und Ethylen/Tetracyclododecen-Copolymere.

Das cyclische Olefin wird in einer Menge von 0,1 bis 99,9 Gew.-% und das acyclische Olefin in einer Menge von 0,1 bis 99,9 Gew.-%, jeweils bezogen auf die Gesamtmenge der Monomeren, eingesetzt.

Die Konzentration des eingesetzten acyclischen Olefins ergibt sich aus dessen Löslichkeit in dem Reaktionsmedium bei gegebenem Druck und gegebener Temperatur.

Als cyclische Olefine und acyclische Olefine sind auch Gemische zweier oder mehrerer Olefine des jeweiligen Typs zu verstehen. Das heißt, es können neben polycyclischen Bicopolymeren auch Ter- und Multicopolymere nach dem erfindungsgemäßen Verfahren hergestellt werden. Auch Copolymere monocyclischer Olefine und acyclischer Olefine können nach dem beschriebenen Verfahren erhalten werden.

Von den monocyclischen Olefinen ist Cyclopenten, das substituiert sein kann, bevorzugt.

Bevorzugt wird das erfindungsgemäße Verfahren bei Temperaturen von -78 bis 200°C, insbesondere 0 bis 100°C, und einem Druck von 0,01 bis 64 bar durchgeführt.

Bei der Herstellung von Copolymerisaten kann die Variation der Molverhältnisse des cyclischen Olefins zum eingesetzten acyclischen Olefin in einem weiten Bereich erfolgen. Bevorzugt werden molare Verhältnisse von 3:1 bis 100:1 Cycloolefin zu offenkettigem Olefin eingesetzt. Durch die Wahl der Polymerisationstemperatur, durch die Konzentration der Katalysatorkomponenten und das eingesetzte Molverhältnis bzw. den Druck des gasförmigen, offenkettigen Olefins läßt sich die Einbaurate an Comonomer beinahe beliebig steuern. Bevorzugt werden Einbauraten zwischen 20 und 80 Mol-% der cyclischen Komponenten und besonders bevorzugt werden Einbauraten zwischen 40 und 60 Mol-% der cyclischen Komponenten.

Die Polymerisation kann auch mehrstufig erfolgen, wobei auch Blockcopolymere entstehen können (P 42 05 416.8).

Die mittlere Molmasse des gebildeten Polymeren läßt sich weiter durch Wasserstoff-Dosierung, Variation der Katalysatorkonzentration oder Variation der Temperatur in bekannter Weise steuern.

Die Polydispersität $M_w/M_n$ der Copolymeren ist mit Werten von 1,9 bis 3,5 recht eng. Dadurch resultiert ein Eigenschaftsbild, das diese für das Spritzgießen besonders geeignet macht.

Mit dem erfindungsgemäßen Verfahren lassen sich amorphe Cycloolefincopolymere herstellen, die keine teilkristallinen Ethylenpolymerisate enthalten. Die Copolymeren sind transparent, hart und thermoplastisch verarbeitbar. Die Reißspannungen (gemäß DIN 53457) liegen bevorzugt im Bereich von 50 bis 100 MPa, insbesondere zwischen 55 und 70 MPa. Sowohl beim Extrudieren als auch beim Spritzgießen wurden bei Temperaturen von 300°C keine Zersetzungsreaktionen oder ein Viskositätsabbau gefunden.

Die erfindungsgemäß hergestellten Materialien eignen sich besonders zur Herstellung von Formkörpern wie Extrusionsteilen (z.B. Folien, Schläuchen, Rohren, Stangen und Fasern) oder Spritzgußartikeln beliebiger Form und Größe. Eine wichtige Eigenschaft der erfindungsgemäßen Materialien ist ihre Transparenz. Dadurch kommt besonders den optischen Anwendungen der extrudierten oder spritzgegossenen Teile aus diesen Materialien eine große Bedeutung zu. Der mit einem Abbe-Refraktometer und Mischlicht bestimmte Brechungsindex der in den nachfolgenden Beispielen beschriebenen Reaktionsprodukte liegt im Bereich zwischen 1,520 und 1,555. Nachdem der Brechungsindex sehr nahe an dem von Kronglas (n = 1,51) liegt, können die erfindungsgemäßen Produkte als Glasersatz verschiedene Anwendungen finden wie beispielsweise Linsen, Prismen, Trägerplatten und -folien für optische Datenspeicher, für Videoplatten, für Compact Disks, als Deck- und Fokussierscheiben für Solarzellen, als Deck- und Streuscheiben für Leistungsoptiken, als Lichtwellenleiter in der Form von Fasern oder Folien.

In schlagzähmodifizierter Form sind die erfindungsgemäß hergestellten Materialien als Strukturwerkstoff in verschiedenen technischen Bereichen einsetzbar (P 42 13 219.3).

Die erfindungsgemäß erhaltenen Polymere sind auch für die Herstellung von Polymerlegierungen einsetzbar. Die

Legierungen können in der Schmelze oder in Lösung hergestellt werden. Die Legierungen weisen jeweils eine für bestimmte Anwendungen günstige Eigenschaftskombination der Komponenten auf. Für Legierungen mit den erfindungsgemäßen Polymeren sind bevorzugt folgende Polymere einsetzbar:

Polyethylen, Polypropylen, (Ethylen-Propylen)-Copolymere, Polybutylen, Poly-(4-methyl-1-penten), Polyisopren, Polyisobutylen, Naturkautschuk, Poly-(methylmethacrylat), weitere Polymethacrylate, Polyacrylate, (Acrylat-Methacrylat)-Copolymere, Polystyrol, (Styrol-Acrylnitril)-Copolymere, Bisphenol-A-Polycarbonat, weitere Polycarbonate, aromatische Polyestercarbonate, Polyethylenterephthalat, Polybutylenterephthalat, amorphe Polyarylate, Nylon-6, Nylon-66, weitere Polyamide, Polyaramide, Polyetherketone, Polyoxymethylen, Polyoxyethylen, Polyurethane, Polysulfone, Polyethersulfone, Polyvinylidenfluorid.

Das erfindungsgemäße Verfahren liefert mit hoher Aktivität transparente Cycloolefincopolymere, die hohe Reißfestigkeiten aufweisen.

Die in den folgenden Beispielen angegebenen Glastemperaturen Tg wurden mittels DSC (Differential Scanning Calorimetry) bei einer Aufheizrate von 20°C/min bestimmt. Die angegebenen Viskositätszahlen wurden gemäß DIN 53728 ermittelt. Die mechanischen Eigenschaften wurden im Zugdehnungsversuch gemessen (DIN 53457, Instron 4302).

Als Maß für die Katalysatoraktivität wird die Ausbeute an Polymer pro Zeiteinheit und pro mmol Metallocen herangezogen:

$$\text{Aktivität} = \frac{\text{Polymer [g]}}{\text{Zeitenheit [h] x Menge Metallocen [mmol]}} = A^*$$

Die Erfindung wird durch folgende Beispiele näher erläutert:

Beispiel 1:

In einem 1,5 $dm^3$-Autoklav, der vorher gründlich mit Ethen gespühlt wurde, werden 600 $cm^3$ einer 85 gew.-%igen Lösung von Norbornen in Toluol vorgelegt. Durch mehrfaches Aufdrücken von Ethen (18 bar) wurde die Lösung mit Ethen gesättigt. In den so vorbereiteten Reaktor wurden im Gegenstrom 5 $dm^3$ toluolische Methylaluminoxanlösung (10,1 Gew.-%ige Methylaluminoxanlösung der Molmasse 1300 g/mol nach kryoskopischer Bestimmung) dosiert und 30 Minuten bei 70°C gerührt. Eine Lösung von 0,65 mg ([4-($\eta^5$-Cyclopentadienyl)-($\eta^5$-4,5-tetrahydropentalen)]-dichlorozirconium in 5 $cm^3$ toluolischer Methylaluminoxanlösung wurde nach 15 minütiger Voraktivierung zugegeben. (Im Falle einer Wasserstoffregelung kann an dieser Stelle Wasserstoff aufgepreßt werden.)

Unter Rühren (750 UPM) wurde eine Stunde polymerisiert, wobei der Ethendruck durch Nachdosieren bei 18,0 bar gehalten wurde.

Nach Ende der Reaktionszeit wurde das Polymerisationsgemisch in ein Gefäß abgelassen und sofort in 5 $dm^3$ Aceton eingetragen, 10 Minuten gerührt und anschließend das ausgefallene Produkt filtriert. Der Filterkuchen wurde je dreimal abwechselnd mit 10 %iger Salzsäure und Aceton gewaschen. Abschließend wurde mit Wasser neutral gewaschen, der Rückstand in Aceton aufgeschlämmt und erneut filtriert. Das so gereinigte Polymer wurde bei 80°C im Vakuum (0,2 bar) 15 Stunden getrocknet.

Nach der Trocknung wurden 94,6 g farbloses Polymer erhalten, welches eine Glastemperatur von 176°C, eine Viskositätszahl von 66,5 $cm^3$/g, eine Reißspannung von 61 MPa und eine Reißdehnung von 3,1% aufwies. Die Aktivität A* betrug 54 156 g Polymer/h x mmol.

Beispiel 2:

In einem 1,5 $dm^3$-Autoklav, der vorher gründlich mit Ethen gespühlt wurde, werden 600 $cm^3$ einer 85 gew.-%igen Lösung von Norbornen in Toluol vorgelegt. Durch mehrfaches Aufdrücken von Ethen (18 bar) wurde die Lösung mit Ethen gesättigt. In den so vorbereiteten Reaktor wurden im Gegenstrom 5 $dm^3$ toluolische Methylaluminoxanlösung (10,1 Gew.-%ige Methylaluminoxanlösung der Molmasse 1300 g/mol nach kryoskopischer Bestimmung) dosiert und 30 Minuten bei 70°C gerührt. Eine Lösung von 0,65 mg ([4-($\eta^5$-Cyclopentadienyl)-($\eta^5$-4,5-tetrahydropentalen)]-dichlorozirconium in 5 $cm^3$ toluolischer Methylaluminoxanlösung wurde nach 15 minütiger Voraktivierung zugegeben. (Im Falle einer Wasserstoffregelung kann an dieser Stelle Wasserstoff aufgepreßt werden.)

Unter Rühren (750 UPM) wurde eine Stunde polymerisiert, wobei der Ethendruck durch Nachdosieren bei 18,0 bar gehalten wurde.

Nach Ende der Reaktionszeit wurde das Polymerisationsgemisch in ein Gefäß abgelassen und sofort in 5 $dm^3$ Aceton eingetragen, 10 Minuten gerührt und anschließend das ausgefallene Produkt filtriert. Der Filterkuchen wurde je dreimal abwechselnd mit 10 %iger Salzsäure und Aceton gewaschen. Abschließend wurde mit Wasser neutral gewaschen, der Rückstand in Aceton aufgeschlämmt und erneut filtriert. Das so gereinigte Polymer wurde bei 80°C im

Vakuum (0,2 bar) 15 Stunden getrocknet.

Nach der Trocknung wurden 74,36 g farbloses Polymer erhalten, welches eine Glastemperatur von 178,9°C, eine Viskositätszahl von 70,6 $cm^3$/g, eine Reißspannung von 60 MPa und eine Reißdehnung von 3,2% aufwies. Die Aktivität A* betrug 45400 g Polymer/h x mmol.

Beispiel 3:

In einem 1,5 $dm^3$-Autoklav, der vorher gründlich mit Ethen gespühlt wurde, weiden 600 $cm^3$ einer 70 gew.-%igen Lösung von Norbornen in Toluol vorgelegt. Durch mehrfaches Aufdrücken von Ethen (16 bar) wurde die Lösung mit Ethen gesättigt. In den so vorbereiteten Reaktor wurden im Gegenstrom 5 $dm^3$ toluolische Methylaluminoxanlösung (10,1 Gew.-%ige Methylaluminoxanlösung der Molmasse 1300 g/mol nach kryoskopischer Bestimmung) dosiert und 30 Minuten bei 70°C gerührt. Eine Lösung von 0,65 mg ([4-($\eta^5$-Cyclopentadienyl)-($\eta^5$-4,5-tetrahydropentalen)]-dichlorozirconium in 5 $cm^3$ toluolischer Methylaluminoxanlösung wurde nach 15 minütiger Voraktivierung zugegeben. (Im Falle einer Wasserstoffregelung kann an dieser Stelle Wasserstoff aufgepreßt werden).

Unter Rühren (750 UPM) wurde eine Stunde polymerisiert, wobei der Ethendruck durch Nachdosieren bei 16,0 bar gehalten wurde.

Nach Ende der Reaktionszeit wurde das Polymerisationsgemisch in ein Gefäß abgelassen und sofort in 5 $dm^3$ Aceton eingetragen, 10 Minuten gerührt und anschließend das ausgefallene Produkt filtriert. Der Filterkuchen wurde je dreimal abwechselnd mit 10 %iger Salzsäure und Aceton gewaschen. Abschließend wurde mit Wasser neutral gewaschen, der Rückstand in Aceton aufgeschlämmt und erneut filtriert. Das so gereinigte Polymer wurde bei 80°C im Vakuum (0,2 bar) 15 Stunden getrocknet.

Nach der Trocknung wurden 110 g farbloses Polymer erhalten, welches eine Glastemperatur von 163,5°C, eine Viskositätszahl von 86,5 $cm^3$/g, eine Reißspannung von 61 MPa und eine Reißdehnung von 3,1% aufwies. Die Aktivität A* betrug 41624 g Polymer/h x mmol.

Beispiel 4 (Vergleichsbeispiel):

Es wurde gemäß Beispiel 1 verfahren, jedoch wurde Isopropyliden(cyclopentadienyl)(1-indenyl)dichlorozirkonium als Metallocenverbin dung verwendet. Es wurden 89 g Polymer erhalten, welches eine Glastemperatur von 150°C, eine Viskositätszahl von 57 $cm^3$/g, eine Reißspannung von 61 MPa und eine Reißdehnung von 3,3% aufwies. Die Aktivität A* betrug 34000 g Polymer/h x mmol.

**Patentansprüche**

1. Verfahren zur Herstellung eines Cycloolefincopolymers durch Polymerisation mindestens eines cyclischen Olefins und mindestens eines acyclischen Olefins, in Gegenwart eines Katalysators, welcher mindestens einen Cokatalysator und mindestens eine stereorigide Metallocenverbindung enthält, wobei die stereorigide Metallocenverbindung als Liganden mindestens zwei substituierte oder unsubstituierte Cyclopentadienylgruppen aufweist, die über einen Fünfring miteinander verbunden sind, wobei mindestens eine Cyclopentadienylgruppe an den verbindenden Fünfring anelliert ist.

2. Verfahren gemäß Anspruch 1, worin mindestens ein polycyclisches Olefin und mindestens ein 1-Olefin polymerisiert werden.

3. Verfahren gemäß Anspruch 1 oder 2, worin die stereorigide Metallocenverbindung eine Verbindung der Formel I ist

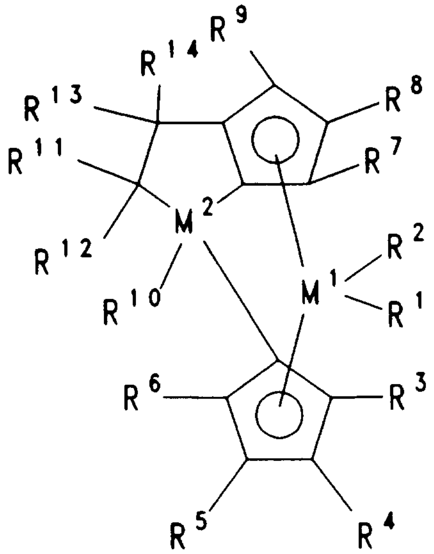

( I )

, worin

$M^1$ ein Metall der Gruppe IIIb, IVb, Vb oder VIb des Periodensystems ist,

$M^2$ Kohlenstoff, Silizium oder Germanium ist,

$R^1$ und $R^2$ gleich oder verschieden sind und ein Wasserstoffatom, eine $C_1$-$C_{40}$-kohlenstoffhaltige Gruppe wie eine $C_1$-$C_{10}$-Alkyl-, eine $C_1$-$C_{10}$-Alkoxy, eine $C_6$-$C_{10}$-Aryl-, eine $C_6$-$C_{25}$-Aryloxy-, eine $C_2$-$C_{10}$-Alkenyl-, eine $C_7$-$C_{40}$-Arylalkyl- oder eine $C_7$-$C_{40}$-Arylalkenylgruppe, eine OH-Gruppe, ein Halogenatom oder $NR^{15}_2$, worin $R^{15}$ gleich oder verschieden ein Halogenatom, eine $C_1$-$C_{10}$-Alkylgruppe oder eine $C_6$-$C_{10}$-Arylgruppe sind oder ein Ringsystem bilden, bedeuten, oder $R^1$ und $R^2$ zusammen mit den sie verbindenden Atomen ein Ringsystem bilden,

$R^3$, $R^4$, $R^5$, $R^6$, $R^7$, $R^8$ und $R^9$ gleich oder verschieden sind und ein Wasserstoffatom, ein Halogenatom, eine $C_1$-$C_{40}$-kohlenstoffhaltige Gruppe wie eine $C_1$-$C_{10}$-Alkylgruppe die halogeniert sein kann, eine $C_6$-$C_{20}$-Arylgruppe, die halogeniert sein kann, eine $C_6$-$C_{20}$-Aryloxy-, eine $C_2$-$C_{12}$-Alkenyl-, eine $C_7$-$C_{40}$-Arylalkyl-, eine $C_7$-$C_{40}$-Alkylaryl-, oder eine $C_8$-$C_{40}$-Arylalkenylgruppe, einen $-R^{15}$-$SiR^{15}_3$-, $-NR^{15}_2$-, $-SiOR^{15}_3$-, $-SiSR^{15}_3$- oder $-PR^{15}_2$-Rest bedeuten, worin $R^{15}$ gleich oder verschieden ein Halogenatom, eine $C_1$-$C_{10}$-Alkylgruppe oder eine $C_6$-$C_{10}$-Arylgruppe sind oder ein Ringsystem bilden, oder zwei oder mehr benachbarte Reste $R^3$, $R^4$, $R^5$, $R^6$, $R^7$, $R^8$ und $R^9$ zusammen mit den sie verbindenen Atomen ein Ringsystem bilden, welches bevorzugt 4 bis 40, besonders bevorzugt 6 bis 20 Kohlenstoffatome enthält,

$R^{10}$ ein Wasserstoffatom, oder eine $C_1$-$C_{40}$-kohlenstoffhaltige Gruppe wie eine $C_1$-$C_{20}$-Alkyl-, eine $C_1$-$C_{10}$-Alkoxy-, eine $C_6$-$C_{20}$-Aryl-, eine $C_6$-$C_{20}$-Aryloxy-, eine $C_2$-$C_{12}$-Alkenyl-, eine $C_7$-$C_{40}$-Arylalkyl-, eine $C_7$-$C_{40}$-Alkylaryl-, oder eine $C_8$-$C_{40}$-Arylalkenylgruppe bedeutet, die jeweils Reste $-NR^{15}_3$, $-SiR^{15}_3$, $-SR^{15}_2$ oder $-OSiR^{15}_3$ tragen können, worin $R^{15}$ ein Halogenatom, eine $C_1$-$C_{10}$-Alkylgruppe oder eine $C_6$-$C_{10}$-Arylgruppe ist, oder $R^{10}$ mit einem oder mehreren der Reste $R^3$, $R^4$, $R^5$ und $R^6$ verbunden ist,

$R^{11}$ und $R^{12}$ gleich oder verschieden sind, und ein Wasserstoffatom, eine $C_1$-$C_{40}$-kohlenstoffhaltige Gruppe wie eine $C_1$-$C_{20}$-Alkyl-, eine $C_1$-$C_{10}$-Alkoxy-, eine $C_6$-$C_{20}$-Aryl-, eine $C_2$-$C_{12}$-Alkenyl-, ein $C_7$-$C_{40}$-Arylalkyl-, eine $C_7$-$C_{40}$-Alkylaryl-, oder eine $C_8$-$C_{40}$-Arylalkenylgruppe bedeutet, die jeweils Reste, wie ein Halogenatom, $-NR^{15}_3$, $-SR^{15}_2$, $-SiR^{15}_3$ oder $-OSiR^{15}_3$ tragen können, worin $R^{15}$ ein Halogenatom, eine $C_1$-$C_{10}$ Alkygruppe oder eine $C_6$-$C_{10}$ Arylgruppe ist,

$R^{13}$ und $R^{14}$ gleich oder verschieden sind, und ein Wasserstoffatom, eine $C_1$-$C_{40}$-kohlenstoffhaltige Gruppe wie eine $C_1$-$C_{20}$-Alkyl-, eine $C_1$-$C_{10}$-Alkoxy-, eine $C_6$-$C_{20}$-Aryl-, eine $C_2$-$C_{12}$-Alkenyl-, ein $C_7$-$C_{40}$-Arylalkyl-, eine $C_7$-$C_{40}$-Alkylaryl-, oder eine $C_8$-$C_{40}$-Arylalkenylgruppe bedeutet, die jeweils Reste, wie ein Halogenatom, $-NR^{15}_3$, $-SR^{15}_2$, $-SiR^{15}_3$ oder $-OSiR^{15}_3$ tragen können, worin $R^{15}$ ein Halogenatom, eine $C_1$-$C_{10}$ Alkylgruppe oder eine $C_6$-$C_{10}$ Arylgruppe ist.

**4.** Verfahren gemäß Anspruch 3, worin in der stereorigiden Metallocenverbindung der Formel I
$M^1$ ein Metall der Gruppe IVb des Periodensystems der Elemente wie Titan, Zirkonium oder Hafnium, insbesondere Zirkonium ist,
$R^1$ und $R^2$ gleich sind und eine $C_1$-$C_4$-Alkylgruppe oder ein Halogenatom wie Fluor, Chlor, Brom oder Jod, insbesondere Chlor bedeuten,

$R^3$, $R^4$, $R^5$, $R^6$, $R^7$, $R^8$ und $R^9$ gleich oder verschieden sind und ein Wasserstoffatom, eine $C_1$-$C_{10}$-Alkylgruppe oder eine $C_6$-$C_{24}$-Arylgruppe sind, oder zwei oder mehr benachbarte Reste $R^3$, $R^4$, $R^5$, $R^6$, $R^7$, $R^8$ und $R^9$ zusammen mit den sie verbindenden Atomen ein aromatisches oder aliphatisches kohlenstoffhaltiges Ringsystem mit 4 bis 20 Kohlenstoffatomen bilden,
$R^{10}$ ein Wasserstoffatom, eine $C_6$-$C_{24}$-Arylgruppe oder eine $C_1$-$C_{10}$-Alkylgruppe, insbesondere $C_1$-$C_4$-Alkylgruppe ist,
$M^2$ Kohlenstoff ist,
$R^{11}$ und $R^{12}$ gleich oder verschieden sind, und $R^{11}$ ein Wasserstoffatom, eine $C_1$-$C_{10}$-kohlenstoffhaltige Gruppe, insbesondere eine $C_1$ -$C_4$-Alkylgruppe oder eine $C_6$-$C_{10}$-Arylgruppe und $R^{12}$ ein Wasserstoffatom sind und
$R^{13}$ und $R^{14}$ gleich oder verschieden sind und ein Wasserstoffatom, eine $C_1$-$C_{10}$-kohlenstoffhaltige Gruppe, insbesondere eine $C_1$-$C_4$-Alkylgruppe oder eine $C_6$-$C_{10}$-Arylgruppe bedeuten.

**5.** Verfahren gemäß Anspruch 3 oder 4, worin in der stereorigiden Metallocenverbindung der Formel I
$M^1$ Zirkonium ist,
$R^1$ und $R^2$ gleich sind und ein Halogenatom, insbesondere Chlor bedeuten,
$R^3$, $R^4$, $R^5$, $R^6$, $R^7$ und $R^9$ gleich oder verschieden sind und ein Wasserstoffatom oder eine $C_1$-$C_4$-Alkylgruppe wie Methyl, Ethyl, Propyl, Isopropyl, Butyl oder Isobutyl oder eine $C_6$-$C_{14}$-Arylgruppe wie Phenyl oder Naphtyl bedeuten, oder
$R^3$ und $R^4$ und/oder $R^5$ und $R^6$ zusammen mit den sie verbindenden Atomen ein aromatisches Kohlenwasserstoffringsystem mit 4 bis 20 Kohlenstoffatomen bilden, insbesondere einen Sechsring, der seinerseits substituiert sein kann,
$R^8$ ein Wasserstoffatom ist,
$M^2$ ein Kohlenstoffatom ist,
$R^{10}$ ein Wasserstoffatom, eine $C_1$-$C_6$-Alkylgruppe, insbesondere Methyl, oder eine $C_6$-$C_{10}$-Arylgruppe, insbesondere Phenyl ist,
$R^{11}$ und $R^{12}$ gleich sind und ein Wasserstoffatom bedeuten und
$R^{13}$ und $R^{14}$ gleich oder verschieden sind und eine Methyl- oder eine Phenylgruppe bedeuten.

**6.** Verfahren gemäß einem oder mehreren der Ansprüche 1 bis 5, worin der Cokatalysator ein Aluminoxan ist.

**7.** Cycloolefincopolymer, herstellbar nach dem Verfahren gemäß einem oder mehreren der Ansprüche 1 bis 6.

**8.** Polymerlegierung, enthaltend mindestens ein Cycloolefincopolymer gemäß Anspruch 7.

**9.** Formkörper, enthaltend mindestens ein Cycloolefincopolymer gemäß Anspruch 7.

**10.** Formkörper, enthaltend eine Polymerlegierung gemäß Anspruch 8.